(19) Europäisches Patentamt
European Patent Office
Office européen des brevets

(11) **EP 1 157 267 B1**

(12) **EUROPEAN PATENT SPECIFICATION**

(45) Date of publication and mention of the grant of the patent:
**05.10.2016 Bulletin 2016/40**

(21) Application number: **00909287.5**

(22) Date of filing: **02.03.2000**

(51) Int Cl.:
**G01N 21/64** $^{(2006.01)}$

(86) International application number:
**PCT/EP2000/001787**

(87) International publication number:
**WO 2000/052451 (08.09.2000 Gazette 2000/36)**

(54) **FLUORESCENCE BINDING ASSAY METHOD**

FLUORESZENZ-ASSAY-VERFAHREN

PROCÉDÉ D'ESSAI PAR FLUORESCENCE

(84) Designated Contracting States:
**AT BE CH CY DE DK ES FI FR GB GR IE IT LI LU MC NL PT SE**

(30) Priority: **03.03.1999 EP 99104273**
**14.12.1999 EP 99124905**

(43) Date of publication of application:
**28.11.2001 Bulletin 2001/48**

(73) Proprietor: **Olympus Corporation**
**Shibuya-ku, Tokyo (JP)**

(72) Inventor: **MEYER-ALMES, Franz-Josef**
**D-58636 Iserlohn (DE)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-A- 0 099 266       EP-A- 0 697 590**
**EP-A1- 0 884 583       US-A- 4 421 860**

• **K.M. BERLAND ET AL: "Two-photon fluorescence correlation spectroscopy: method and application to the intracellular environment" BIOPHYSICAL JOURNAL, vol. 68, February 1995 (1995-02), pages 694-701, XP000195638**
• **AUER M ET AL: "FLUORESCENCE CORRELATION SPECTROSCOPY: LEAD DISCOVERY BY MINIATURIZED HTS", DRUG DISCOVERY TODAY, ELSEVIER, RAHWAY, NJ, US, vol. 3, no. 10, 1 October 1998 (1998-10-01), pages 457-465, XP000973192, ISSN: 1359-6446, DOI: 10.1016/S1359-6446(98)01240-9**

**Description**

Fluorescence Correlation Spectroscopy (FCS) and related fluorescence technologies have been developed into versatile, specific and sensitive methods applicable to the life sciences. DNA-DNA, protein-DNA, ligand-receptor, dye-DNA, and protein-protein interactions, among others, have been successfully analysed using FCS. Recently, special applications of FCS in the field of high throughput pharmaceutical screening have been described (Auer M. et al., Drug Discovery Today, 3, 457 - 465, October 1998).

In order to obtain a rapid and precise measurement of the interaction between two molecules using FCS, there must be a substantial difference between the translational diffusion constant of a free molecule and that of the same molecule when it is part of a molecular complex. To achieve this change, typical FCS assays require that the smaller of the two interacting molecules be tagged with a fluorescent dye. If only the larger binding partner can be labeled with a fluorophore, the binding event can not be measured using FCS since the resulting change in translational diffusion upon complex formation will not be sufficient to be detected.

EP 0884583 A1 discloses a method for characterizing samples which contain units, comprising the steps of a) monitoring intensity fluctuations of radiation emitted, scattered and/or reflected by the units in at least one measurement volume with at least one detection means which is capable to detect radiation emitted, scattered and/or reflected by said units, b) determining at least two-dimensional intermediate statistical data from the detected intensity fluctuations, c) determining the concentration of the units as a function of at least two specific physical properties out of said intermediate statistical data.

To overcome this difficulty, US patent 4,421,860 discloses the use of carrier particles in a homogeneous fluoro-immunoassay involving auto-correlation processing of optically sensed signals. This technique includes the use of carrier particles with at least one active component coated on these particles, and the exposure of the particles to at least two additional active components in solution. Emphasis is put on the fact that said carrier particles must be relatively large. The only example describes the use of inert particles having a diameter of 4.3 $\mu$m. The carrier particles may also be biological cells such as blood cells with an active component on their surface. These cells have an even higher diameter than the disclosed artificial carrier particles, ranging from nearly 10 $\mu$m of a human erythrocyte up to about 200 $\mu$m of a human oocyte. One major draw-back of this method is that the sample cell has to be rapidly moved to prevent sedimentation of the particles. Fluid velocity currents - which are a result of the acceleration of the motion of the sample cell - limit the fluctuation lifetime of any kind of species present in the sample.

The European patent application No. 83304019.9 discloses a method and apparatus for determining the presence of particles in a fluorescent dispersion. Particle sizes are suggested which vary from 0.05 to 100 $\mu$m, where synthetic particles will generally be from about 0.1 $\mu$m to 10 $\mu$m.

The person skilled in the art of FCS is still left alone if the measured FCS signal is intended to be used for quantification of binding. Even if the difference in diffusion coefficients between first and second particle species is more than two-fold and therefore sufficient to separate both species mathematically, the concentrations for both species are only determined correctly if they are identically bright, which almost never is the case for particle based assays since most particles display more than one binding site, and the number of fluorescently labelled first particles binding to the second species is varying according to the binding constant or the presence of inhibiting molecules in the assay. This means that the ratio of brightness between the first and the second species is arbitrary. Moreover, the binding of multiple first particles can induce quenching, so that the brightness of the second species does not depend linearly on the number of particles bound.

The relation between true and apparent concentration is

$$C_1 / C_2 = \frac{Y_1 / Y_2}{Y_1 / Y_2 + \alpha^2 (1 - Y_1 / Y_2)} \qquad (i)$$

$Y_1$    being the measured concentration of the first species
$Y_2$    being the measured concentration of the second species
$C_1$    being the real concentration of the first species
$C_2$    being the real concentration of the second species
$\alpha$    being the ratio of brightnesses of the two species

Even if only particle numbers are detected as signal, a relation between measured signal and real concentrations exists:

$$1 / N = G(0) \ \frac{(Y_1 / Y_2 + \alpha - Y_1 / Y_2 \, \alpha)}{Y + \alpha^2 - Y_1 / Y2 \, \alpha^2} \tag{ii}$$

While in principle it is possible to find a mathematical correction factor according to above formulae, their application is not practical since measurements at different concentration ratios have to be made to determine all relevant parameters.

EP-A-0 099 266 discloses a method and apparatus for determining the presence of particles in a fluorescent dispersion which exceed either a predetermined fluorescence intensity of size. The method and apparatus involve the irradiation of the dispersion with excitation light, the examination of the fluorescence light entering an optical fiber from a portion of the excited region small enough to permit only a low probability that more than one particle of interest is present in the volume during a predetermined period of time, and the measurement of the emitted fluorescence entering the fiber, substantially free of excitation light, to the extent that the fluorescence differs in intensity from that of the dispersion in the absence of the particle.

Accordingly, a principal object of the present invention is to provide an assay or analysis method which overcomes these requirements.

The invention suggests a homogeneous fluorescent binding assay method which includes the use of carrier particles with at least one binding site on each of said carrier particles, and the exposure of the particles to at least two additional components in solution. With one of the components being fluorescently tagged, there is a shifting of some of the tagged components from solution where they are free, into a state where they are bound to the carrier particles. It is preferred that the complexes of fluorescently tagged components bound to carrier particles diffuse within the solution. Subsequently, the solution is subjected to illumination at a first wavelength which causes the fluorescently tagged material to emit radiation at a second wavelength, and optical and electronic techniques are employed to determine the number or fraction of the fluorescently tagged components which are bound to the carrier particles, or which are "free" in solution. Optically sensing the output signals can be performed by either measuring in a repetitive mode a number of photon counts per time interval of defined length or by measuring in a repetitive mode a length of time intervals between preferably consecutive photon counts. Thereafter, distribution functions of either the number of photon counts or the length of time intervals are build from which distribution functions of the specific brightness of said carrier particles and/or said fluorescently tagged components are derived.

The method according to the present invention is focussed on the determination of a function of specific brightness, i.e. the ability of a particle to emit radiation, which specific brightness is rather a static parameter than a dynamic one as disclosed in the prior art. In cases where (i) studies of the auto-correlation function of radiation intensity fail to characterise two kinds of carrier particles having a low mass difference by their diffusion coefficient or (ii) studies of time interval statistics fail to characterise particles by their hydrodynamic properties due to the high polydispersity of the sample, the method according to the present invention presents a way out of this dilemma by suggesting using a static parameter for the characterisation of the sample.

However, it is of particular advantage, especially in performing high throughput assays e.g. in drug discovery, to choose carrier particles in such a way that the complexes between fluorescently tagged components and carrier particles are diffusing within a solution under study. This offers the possibility to additionally check the results obtained according to the present invention by determining hydrodynamic properties of the particles, e.g. their diffusion coefficient. Therefore, in a preferred embodiment of the present invention, determining the amount of fluorescently tagged component which is free and/or that which is bound to the carrier is based on other specific physical properties than specific brightness. These are e.g. diffusion coefficient (to be preferably determined by FCS), absorption cross-section, quantum yield of fluorescence, anisotropy of fluorescence, fluorescence decay time, ratio of fluorescence intensity passing through different optical filters, etc.

Relying on two molecule parameters - specific brightness and diffusion coefficient - is a valuable tool in cases when the specific brightness between the bound and unbound component remains the same (e.g. only a single labelled ligand is bound to a carrier particle in comparison to an unbound labelled ligand). In this exceptional example, the additional determination of the diffusion coefficient is helpful. This assay principle is also a valuable tool in sandwich assays, where in both cases of (i) surplus of antigen and (ii) low antigen concentration a low specific brightness per carrier particle is measured. However, additionally determining a correlation function of fluorescence intensity helps in distinguishing these cases. At low antigen concentration the slowly diffusing carrier particle complex is measurable whereas in cases of surplus of antigen the complex between detection antibody and antigen will be measured.

The invention therefore preferably involves the use of carrier particles having a diameter d which is smaller than or equal to approximately 1 $\mu$m. It is preferred that said carrier particles have a diameter d in the range of 1 nm $\leq$

$d \leq 1 \ \mu m$, in particular 10 $\mu m \leq d \leq 500$ nm, more particularly 50 nm $\leq d \leq 300$ nm.

Preferably, said carrier particles are substantially monodisperse. It is particularly preferred that said carrier particles are highly uniform, having a coefficient of variation (CV) of diameter which is $\leq 20$ %, preferably $\leq 10$ %, more preferably $\leq 5$ %. It is preferred to use highly uniform particles if a specific physical property of the complex between fluorescently tagged component and carrier particle is determined, said specific physical property relating to the shape and size of said complex. In order to separate the specific brightness distributions of complexed and unbound component, highly uniform carrier particles are also a valuable tool.

In a further preferred embodiment, said carrier particles comprise metal oxides, metal hydroxides, silicates including silica gels, metal colloids, silver halogenides, arsenic sulfide, nickel sulfide, cobalt sulfide, carbon colloids, controlled pore-glass beads, cellulose beads and/or organic polymers. It is particularly preferred to use dendrimer-based substances, such as dendrimer polyethylenglycol. These substances are commercially available (e.g. Star PEG, Shearwater Polymers Inc.). Any suitable suspendable solid support, however, can be employed, including cellulose beads, controlled pore-glass beads, silica gels, and other types of polystyrene beads, optionally cross-linked with divinylbenzene and optionally grafted with polyethylene glycol and optionally functionalized with amino, hydroxy, carboxyl, or halo groups. Additional supports include grafted co-poly beads, poly-acrylamide beads, latex beads, dimethylacrylamide beads optionally cross-linked with N,N[1]-bis-acryloyl ethylene diamine, glass particles coated with hydrophobic polymers, etc., i.e., having a rigid or semi-rigid surface. Divinylbenzene-crosslinked, polyethyleneglycol-grafted polystyrene type beads can be used such as TentaGel S-IMH$_2$® beads (Rapp Polymere, Tubingen, Germany).

In a further embodiment said carrier particles exhibit only such a limited amount of binding sites that no quenching effects between neighboured fluorophores occurs. It is preferred to have a surface area per bound component $\geq 10^5$ A$^2$, preferably $\geq 10^6$ A$^2$.

Illuminating the solution is preferably performed on basis of a confocal optical set-up and/or multi-photon excitation and/or a near-field optical set-up. The confocal technique is based on using a point source of light sharply focussed to a diffraction-limited spot on the sample. The emitted light is viewed through a spatial filter (pinhole) that isolates the viewing area to that exactly coincident with the illuminating spot. Thus, the illumination and detection apertures are optically conjugated with each other. Light originating from focal planes other than that of the objective lens is rejected, which effectively provides a very small depth of field. It is preferred to use a microscope objective with a high numerical aperture, preferably $\geq 0.9$, and/or a small working distance, preferably $\leq 1$ mm. It is also possible to use a fibre-optical set-up which is inexpensive and easy to construct and to interface to existing optical instruments. Fibres are used for both the illuminating and the sensing pathways of the optical instrument. The finite diameter of the fibre optic serves as the effective confocal pinhole. Within multiple-photon excitation, long wavelength light pulses providing sufficient instantaneous intensity to produce in a sample simultaneous absorption of two or more incident photons are focussed at an object plane. It might be preferred to use light sources producing subpicosecond pulses of sufficient instantaneous intensity and repetition rate. Because of the high instantaneous power provided by the very short duration intense pulses focussed to the diffraction limit, there is an appreciable probability that a fluorophore, contained in the sample, and normally excitable by a single high energy photon having a short wavelength will absorb two or more long wavelength photons from the laser source simultaneously. This absorption combines the energy of the photons in the fluorophore molecule, thereby raising the fluorophore to its excited state. When the fluorophore returns to its normal state, it emits light, and this light then passes back through the microscope optics to a suitable detector. Multiple photon excitation provides improved background discrimination and reduces photobleaching of the fluorophores. Within a near-field optical set-up, an aperture having a diameter that is smaller than an incident optical wavelength is used. In one scheme, a sample is illuminated by an external source. A portion of the light emitted by the sample is collected by the aperture and relayed to a photo-detector by, for example, an optical fibre. In an alternate scheme, light is relayed by an optical fibre, which itself functions as miniscule light source for illumination of the sample.

In one embodiment of the present invention, optically sensing output signals is performed by measuring in a repetitive mode a number of photon counts per time interval of defined length. Electronically processing the optically sensed output signals comprises the steps of determining a distribution function of the number of photon counts per said time interval and thereafter determining a distribution function of specific brightness of said carrier particles and/or said fluorescently tagged components on basis of said function of the number of photon counts. The specific brightness in the sense of the present invention is a physical characteristic which expresses in what extent a molecule is able to emit radiation. It is thought to characterise single molecules or complexes and therefore the value of specific brightness is neither depending on concentration of said molecules or complexes, nor on the presence of other molecules or complexes. Thus, a change of the total count rate of photons emitted from the measurement volume, if only due to a change in concentration of the total number of particles, does not influence the value of specific brightness. Specific brightness of a particle is usually expressed in terms of the mean count rate per particle which is a weighted average of the count rate over co-ordinates of the particle in the measurement volume. In some cases, one might prefer to express the specific brightness in count rates corresponding to a particle positioned in a place where the count rate has its top values. This could e.g. be the centre of the focus of the incident beam.

In a further embodiment of the present invention, optically sensing output signals is performed by measuring in a repetitive mode a length of time intervals between preferably consecutive photon counts. Electronically processing the optically sensed output signals comprises the steps of determining a distribution function of the length of said time intervals and thereafter determining a distribution function of specific brightness of said carrier particles and/or said fluorescently tagged components on basis of said function of the length of time intervals.

In both embodiments described above, it is particularly useful to perform the electronically processing by applying an inverse transformation with linear regularisation and/or constraints. For the method of inverse transformation see e.g. W. H. Press, S. A. Teukolsky, W. T. Vetterling, B. P. Flannery, Numerical recipes in C: the art of scientific computing, 2nd edition, Cambridge University Press, 1992, p. 808, which is hereby incorporated by reference.

Carrier particles bearing binding sites such as antibodies, protein A, or streptavidin, can be used to perform a variety of assays which capitalise on the advantages of using the present invention to study biological interactions. Using this strategy it is possible to use FCS to additonally evaluate the binding of a large fluorescent antibody to a much smaller antigen - thereby eliminating the requirement of conventional FCS that the smaller molecule bears the fluorescent tag, and capitalising on the broad availability of fluorescent antibodies. The assay principle according to the present invention allows for the design of combined fluorescence intensity distribution analysis yielding the specific brightness and FCS experiments without regard to the mass differences between antigen and antibody.

The carrier particles which are used in the present invention should preferably exhibit several features. They should preferably behave as true diffusing molecules in order to satisfy the fit model which is used for evaluation. This condition is fulfilled if the diameter is in the nanometer range, preferably smaller than 300 nm. The carrier particles should be stable as colloids in solution and should show no tendency to aggregate. Furthermore, non-specific binding of molecules, in particular non-specific binding of the fluorescent ligand, to the particle surface should not occur.

Assays according to the present invention are characterised by the binding of e.g. many ligands to a particle which carries e.g. many receptor molecules. In the follo-wing section, the theoretical basis for an additional FCS analysis of such systems - besides the determination of specific brightnesses - is described.

In case of a competition assay, the system of chemical reactions is described by

$$L + R \overset{K_1}{\Longleftrightarrow} RL$$

$$C + R \overset{K_2}{\Longleftrightarrow} RC$$

with C representing the non-fluorescent ligand which competes with the fluorescent ligand L for binding to the receptor R. RL and RC are the complexes of L and R, and C and R, respectively, with $K_1$ and $K_2$ being the corresponding dissociation constants which describe the binding affinity.

The concentrations of the molecular species involved in the chemical equilibrium can be calculated in accordance with the Feldman equations:

$$[L]_{eq} = [L]_0 - [RL]_{eq}$$
$$[C]_{eq} = [C]_0 - [RC]_{eq}$$
$$[RL]_{eq} = \frac{[L]_{eq}[R]_0 K_1}{1 + K_1[L]_{eq} + K_2[C]_{eq}}$$
$$[RC]_{eq} = \frac{[C]_{eq}[R]_0 K_2}{1 + K_1[L]_{eq} + K_2[C]_{eq}}$$

$$(1)$$

The equations can be solved numerically using such programs as Mathcad (Mathsoft), Mathematica or Scientist (MicroMath).

The probability p that a receptor molecule is occupied by ligand L is simply given by:

$$p = \frac{[RL]_{eq}}{[R]_0} \qquad (2)$$

For particles carrying N receptor molecules, the probability that a particle binds n ligand molecules L is:

$$p(n) = \frac{N!(1-p)^{N-n}p^n}{(N-n)!n!} \qquad (3)$$

Since p(n) is a binominal distribution, the mean number and the mean of the square of the number of ligands bound per particle are:

$$\bar{n} = \sum_n np(n) = pN \qquad (4)$$

$$\overline{n^2} = \sum_n n^2 p(n) = Np(1-p+Np) \qquad (5)$$

The auto-correlation amplitude $g_i$ of a diffusing species i is given by:

$$g_i = \frac{c_i q_i^2}{\left(\sum_i c_i q_i\right)^2} = \frac{c_i q_i^2}{I^2} \qquad (6)$$

$c_i$ and $q_i$ denote the concentration and the relative fluorescence intensity, respectively, detected per molecule of species i. For simplicity $q_L$ and $q_{RL}$ are chosen to be 1. Under these conditions, there is no change in fluorescence intensity per molecule when the ligand L binds to its receptor molecule, and the fluorescence intensity of a particle is proportional to the number of bound ligands. This applies for the majority of fluorescent dyes used for FCS.
The amplitude of the unbound ligand L is then simply:

$$g_L = \frac{[L]}{I^2} \qquad (7)$$

The amplitude of the ligands bound to particles $g_B$ can be calculated accordingly using equations 5 and 6:

$$g_B = \frac{1}{I^2} \sum_n [P]_0 p(n)n^2$$
$$= \frac{1}{I^2}[P]_0 Np(1-p+Np) \qquad (8)$$

with $[P]_0$ being the concentration of carrier particles.
The apparent degree of binding determined using FCS is defined as $Y = g_B/(g_L+g_B)$ and the mean number of particles per observation volume is defined as $1/(g_L+g_B)$. Consequently, $g_B$ can be deduced from a conventional FCS-experiment by dividing the calculated degree of binding Y by the corresponding mean number of particles within the focus.
Immuno assay protocols can be easily converted into soluble homogeneous assays according to the present invention. This is particularly useful, because a wealth of quantitative assays employed in diagnostics and pharma screening are immuno- assays, e.g. RIA's, EIA's, ELISAs. The carrier particles can be versatily used as a solid phase which is soluble as a colloid. Therefore, carrier particles with dimensions smaller than 1 $\mu$m, preferably smaller than 300 nm, could be conveniently handled like a true solution. Since the assays according to the present invention are homogeneous assays, time consuming washing steps could be omitted and the overall assay time could be reduced from several hours to half an hour and less. Determination of specific brightness (and optionally a further parameter such as diffusion coefficient utilising preferably a confocal optical set-up) according to the present invention allows for miniaturisation which is in particular important for high throughput pharma screening in order to reduce reagent costs.

The conversion of heterogeneous immuno assays comprises only few steps involving synthesis of fluorescent antigenes/antibodies, immobilisation of antibody on the surface of carrier particles and optimisation of concentration of involved antigenes, antibodies and carrier particles. In case of a competitive assay a fluorescent conjugate of an antigen has to be prepared. If a small antigen is to be conjugated to a fluorophore, the lack of a functional group for coupling or the drop in affinity of the specific antibody could cause problems. But in non isotopic immuno assays usually antigene conjugates with biotin or other probes, e.g. acridine ester, exist which could be used directly. In addition, for many small compounds - e.g. hormones like estradiol, testosterone, progesterone - derivates are available which contain functional groups for linking a fluorophore to them. In the case of estradiol the problem of antibody affinity has been investigated for six fluorescent conjugates. In fact five out of six conjugates could be bound and four conjugates could be shown to bind specifically to the anti-estradiol antibody. Protein antigenes can be labelled with fluorophors or biotin according to standard procedures. In particular the coupling of dyes to antibodies usually does not affect the affinity to their antigene and virtually all antibody and protein conjugates worked in the assays according to the present invention.

The capture antibody or antigene, if an antibody is to be detected, can easily be attached to the carrier particles e.g. by Biotin/Streptavidin, protein A, anti-species secondary antibody. The many existing building blocks of carrier particles and capture antibodies enhance the flexibility of assays according to the present invention.

Since the development of an assay according to the present invention involves always similar steps, the set up of such an assay can be done very efficiently according to standard procedures. Therefore, a major bottleneck in the pharma screening area - the duration to establish a screening assay - could be widened up significantly.

In conclusion, assays according to the present invention represent a new general assay method in the area of diagnostics and pharma screening. They feature maximal flexibility in assay design because of their quasi mass independence and the many available building blocks such e.g. antibodies, carrier particles, biotinylated antigenes. Existing heterogeneous immuno assays can be quickly transferred into homogeneous miniaturisable assays according to the present invention. The applicability of the assay principles according to the present invention is not restricted to classical binding reactions but can be extended to enzyme reactions, provided educt and product could be discriminated using binding to e.g. an antibody. They have a similar performance as conventional immuno assays. The versatility of the assay principles according to the present invention opens new ways to improve the efficiency of drug development by shorten the time for screening assay set up. Further major advantages of the method according to the present invention are the robustness. Data quality is achieved with measurement times much shorter than those known in the prior art. This is due to the excellent signal to noise ratio since a very bright particle can be distinguished reliably from the free labelled ligand. Slowly diffusing particles can be detected more quickly with a beam that is scanned through the sample. The sample is easy to handle and requires no washing steps, making it an ideal assay system for diagnostics and pharmaceutical screening. The assays according to the present invention can be measured within 2 s and standard deviations of less than 5 % over an analyte concentration of 2 orders of magnitude. Since the throughput in pharmaceutical screening can exceed hundred thousand substances per day, it becomes obvious, that assay development time and synthesis of substances become bottle necks in the drug finding process.

Other objects, features and advantages will become apparent from a consideration of the following detailed description and from the accompanying drawings.

Fig. 1 a - e show different types of homogeneous fluorescent binding assay methods.

Fig. 2 a - c show simulated competition curves in respect to different parameters.

Fig. 3 shows a normalized autocorrelation curve relating to example 1.

Fig. 4 shows the results of a theophylline competition assay relating to the theophylline experiment described in example 1.

Fig. 5 shows the results of a competition experiment relating to example 2.

Fig. 6 shows the results of a human chorionic gonadotropin assay relating to example 3.

Fig. 7 depicts a photon count histogram of (A) 5 nM unbound estradiol-TAMRA in the presence of 1 $\mu$M competitor

estradiol or (B) in the absence of competitor. Inverse transformation with regularisation analysis (ITR) of (C) unbound estradiol-TAMRA and (D) conjugate bound to carrier particles. For details see example 4.

Fig. 8 shows the results of a competition assay with antibody-coated carrier particles binding fluorescently labeled estradiol. For details see example 4.

Fig. 9 shows a sandwich assay according to the present invention using antibody coated carrier particles binding hCG. For details see example 5.

Fig. 10 depicts the results of the protein tyrosine phoshatase pharmaceutical screening assay described in example 6.

Fig. 11 shows the principle of a protein tyrosine kinase pharmaceutical screening assay. For details see example 7.

Fig. 12 depicts dose response curves of example 7.

Fig. 13 illustrates further results obtained in example 7.

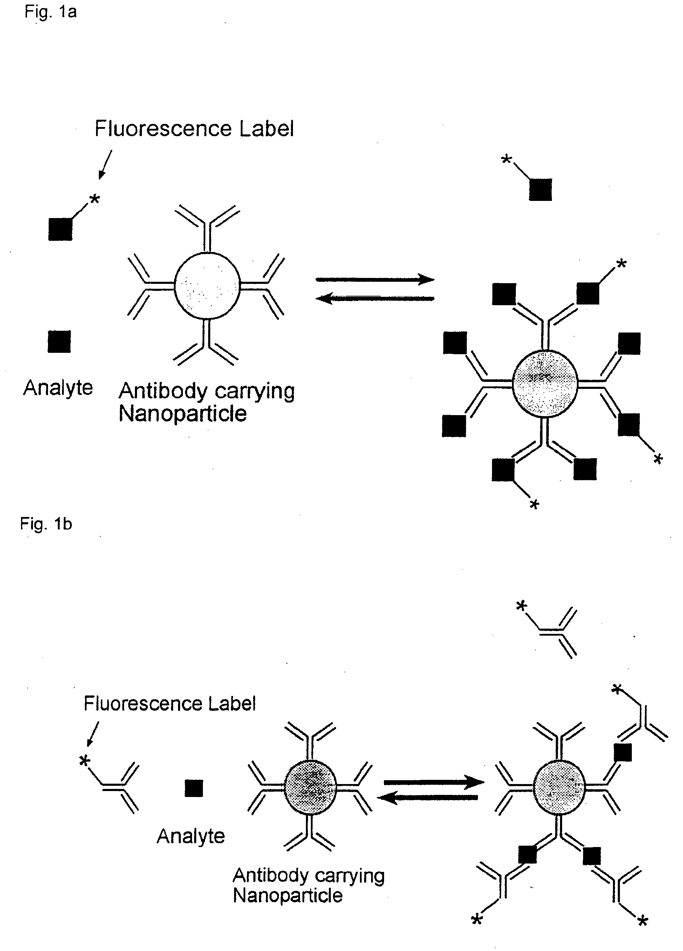

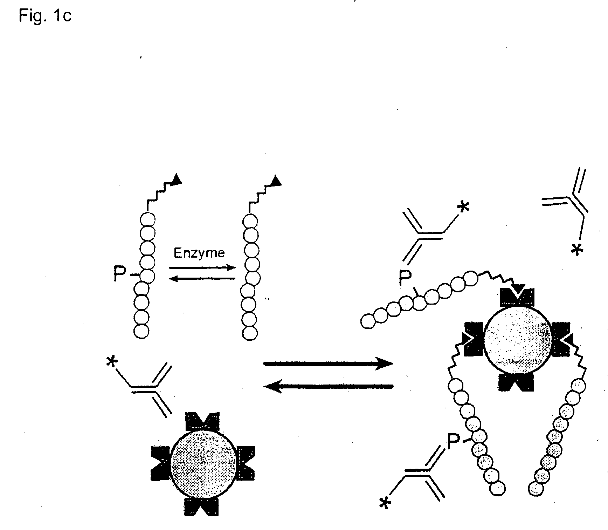

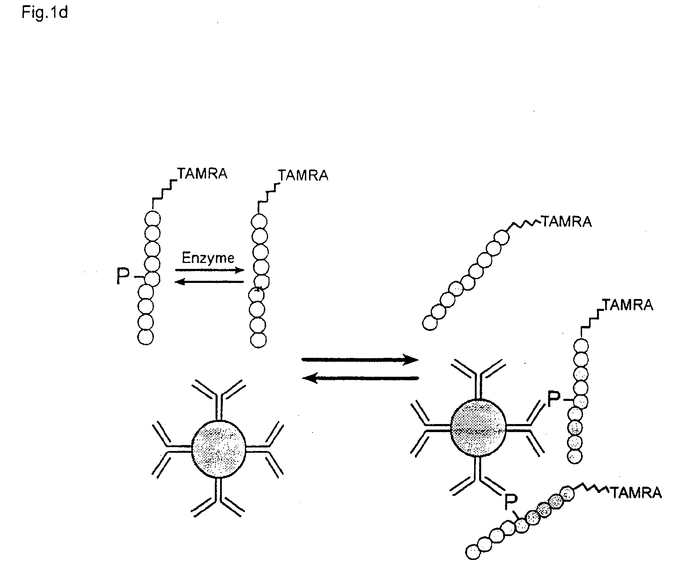

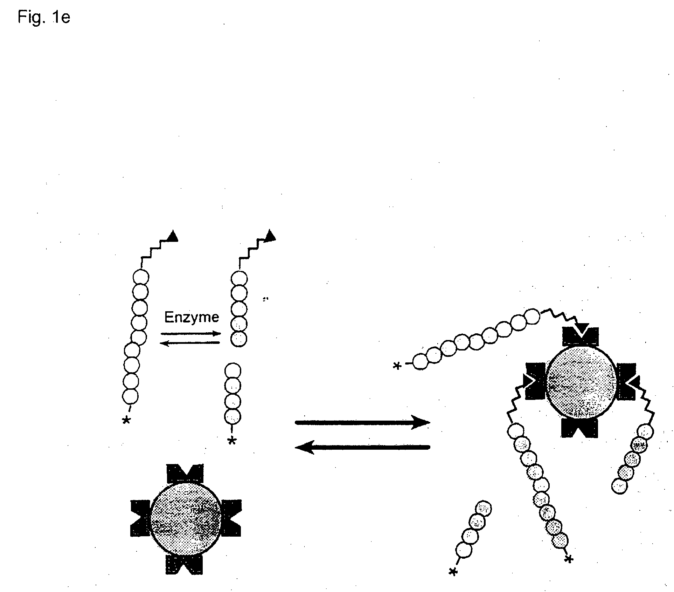

The principles of the present invention will now be considered relative to different homogeneous fluorescent binding assay methods, as illustrated in **Figure 1** a to e. Fig. 1a shows a competitive carrier particle immunoassay. Carrier particles are coated with an antibody. The coated carrier particles, the sample with the unknown amount of an analyte, and a know amount of fluorescently labelled antigen are placed in solution. The analyte and the antigen then compete for binding to the antibody. With increasing analyte concentration, the binding degree of the analyte conjugate decreases and, concurrently, the particle number per observation volume increases. Fig. 1b shows a "sandwich" carrier particle immunoassay. In this embodiment, carrier particles are coated with an antibody. A sample to be tested is added to the solution, and the analyte in the sample is bound to the antibody. A fluorescently labelled antibody is then added to the mixture and binds to the antigen. With increasing analyte concentration the binding degree of fluorescent detection antibody rises and the number of particles inside the focus decreases simultaneously. Fig. 1c shows an enzyme activity carrier particle binding assay. For clearness the example of a phosphatase assay is chosen. A phosphorylated (P) and biotinylated peptide is dephosphorylated by a phosphatase. Subsequently after the enzyme reaction, (i) streptavidin coated carrier particles and (ii) fluorescent anti-phosphotyrosine antibody which binds exclusively the phosphorylated peptide are added. At high enzyme activity no antibody molecule is bound to the carrier particles. If the enzyme activity is low or suppressed by an inhibitor, the antibodies bind to the carrier particles and thus the binding degree increases while the number of particles in the focus is declining. Fig. 1d shows a variant of the assay shown in Fig. 1c. A phosphorylated (P) and fluorescently labelled (TAMRA) peptide is dephosphorylated by a phosphatase. Subsequently after the enzyme reaction, antibody labelled carrier particles are added to which only the phosphorylated peptide is able to bind. At high enzyme activity no peptides are bound to the carrier particle. If the enzyme activity is low or suppressed by an inhibitor, the phosphorylated peptides bind to the carrier particles and thus the binding degree increases while the number of particles in the focus is declining. Fig. 1e shows an enzymatic cleavage assay. A substrate is fluorescently tagged at its one end, whereas the other end is biotinylated. Subsequently after the enzymatic cleavage reaction, streptavidin coated carrier particle are added. At high enzyme activity, many cleaved peptides will bind to the carrier particles via their biotin tag, whereas the low molecular mass fragment which is fluorescently tagged will be freely diffusing in solution.

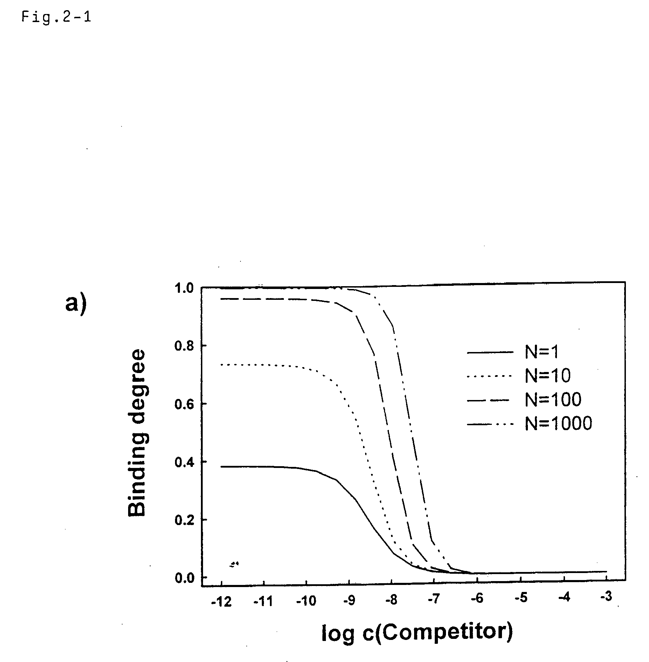

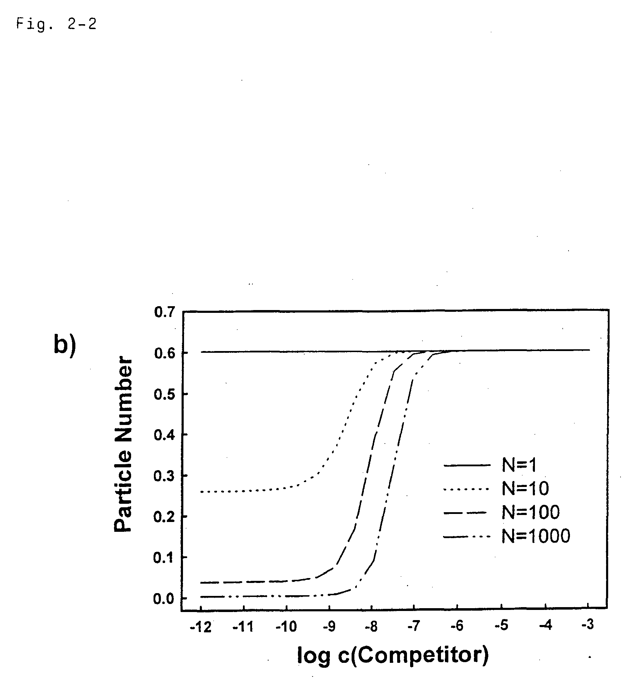

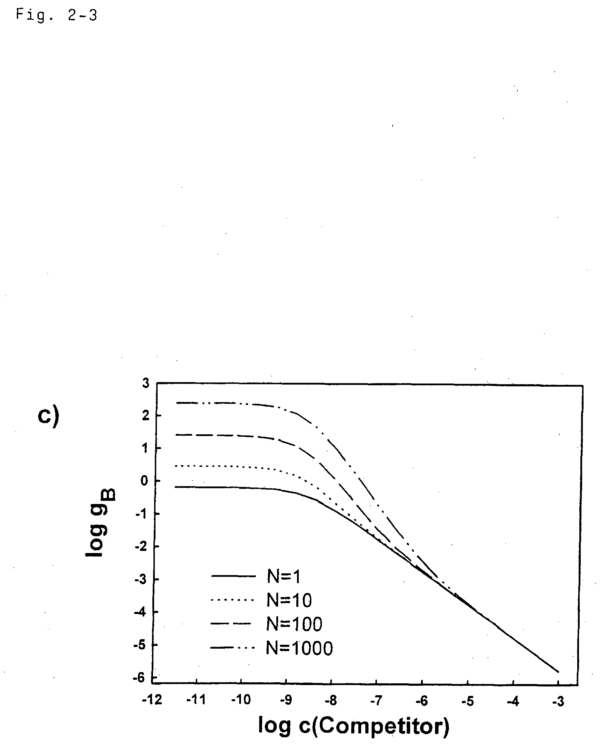

**Figure 2** shows simulated competition curves in respect of a) binding degree, b) mean particle number per observation volume, c) correlation amplitude $g_B$ of bound ligand which were generated using equations 1 and 8 with parameters $K_1 = K_2 = 1$ nM, $[L]_0 = [R]_0 = 1$ nM and different numbers N of receptor molecules per carrier particle.

This assay simulation was performed to determine which assay parameters are important for sensitivity in terms of $IC_{50}$. The $IC_{50}$ is defined as being the concentration of the unlabeled ligand C which inhibits 50 percent of the binding of the labelled ligand L to particles. The corresponding $IC_{50}$-values are summarised in table 1.

In all simulations of FCS correlation amplitudes, the concentration of labelled and unlabelled ligand in mol/l was multiplied by $6.023 \times 10^8$ in order to approximate the number of molecules occupying the FCS observation volume of $10^{-15}$ liter in an actual FCS measurement. The $K_1$ and $K_2$ values were fixed at 1 nM. The parameters $L_0$, $R_0$, $C_0$ and N were varied and are noted for each simulation.

The simulations show that the degree of binding measured using FCS will decrease with increasing competitor concentration. The higher the number of binding sites per carrier particle, the higher the degree of binding measured with FCS despite the fact that the ratio of free to bound ligand does not change (see fig. 2). This is due to differences in weighting the brightness of free ligand molecules and particles with several ligands bound to them in the FCS analysis algorithm. Put another way, this means that the degree of binding is overestimated if more than one fluorescent ligand is bound per particle. This means that the binding signal could be enhanced by using particles which carry many binding sites.

When the stoichiometry of ligand to binding sites is 1:1, the absolute number of particles per observation volume does not change upon binding. Using carrier particles which carry more than one binding site per particle, FCS enables the precise detection of the resulting decrease in the absolute number of particles per observation volume upon binding (see fig. 2, table 1). At the same time, the fluorescence emission per carrier particle increases. With increasing competitor concentration, the correlation amplitude of the bound ligand fraction, $g_B$, vanishes since it is the quotient of binding degree and particle number per observation volume. The greater the number of binding sites attached per particle, the greater the maximum value of the fractional correlation amplitude.

When only binding degree or the number of particles per observation volume are considered, assay sensitivity in terms of $IC_{50}$-values declines as the number of binding sites per carrier particle increases (see table 1). However, evaluation of the correlation amplitude for particle bound complexes $g_B$ should yield a sensitivity which is at least as high as that for simple binary binding (N=1).

Table 1:

| [L]$_0$/ nM | [R]$_0$/ nM | N | Binding Degree | | Particle Number | | $g_B$ | |
|---|---|---|---|---|---|---|---|---|
| | | | $\Delta_{max}$ | $IC_{50}$/ nM | $\Delta_{max}$ | $IC_{50}$/ nM | $\Delta_{max}$ | $IC_{50}$/n M |
| 1 | 1 | 1 | 0.38 | 3 | 0 | - | 0.63 | 3 |
| | | 10 | 0.74 | 4 | 0.33 | 2.5 | 2.8 | 2 |
| | | 100 | 0.97 | 10 | 0.56 | 8 | 25 | 1.5 |
| | | 1000 | 0.99 | 35 | 0.6 | 30 | 250 | 1.5 |
| 1 | 10 | 1 | 0.90 | 20 | 0 | - | 1.5 | 20 |
| | | 10 | 0.95 | 30 | 0.25 | 20 | 2.8 | 20 |
| | | 100 | 0.99 | 50 | 0.53 | 40 | 15 | 15 |
| | | 1000 | 1.0 | 100 | 0.59 | 100 | 135 | 15 |
| 10 | 10 | 1 | 0.73 | 17 | 0 | - | 0.1 | 17 |
| | | 10 | 0.96 | 35 | 5 | 30 | 0.9 | 8 |
| | | 100 | 0.99 | 100 | 5.9 | 90 | 9 | 8 |

### Example 1: Theophylline-Assay

Theophylline is a drug used in the treatment of asthma and apnoea in premature infants (Uauy, R., Shapiro D.L., Smith, B. and Warshaw, J.B., Pediatrics 1975, 55:595-8). Its serum concentration must be closely monitored because even at the therapeutic dosage, some toxic effects can occur.

The TAMRA-theophylline was synthesized by EVOTEC BioSystems AG (Hamburg). Its chemical structure, half saturation point and $IC_{50}$ value for a complex between TAMRA-theophylline and the corresponding antibody is given in **Table 2.** The half-saturation point is defined as the dilution of antibody solution which binds half of the total theophylline conjugate. The competitor was unlabelled theophylline. The concentration of the conjugate was in the nanomolar range. The anti-theophylline antibody was purchased from Europa Research Products (Cambridge, UK). Theophylline was obtained from Sigma. Protein A coated carrier particles used in the experiments were from MicroCaps (Rostock). The carrier particles were Dextran-Ferrite-particles with a mean diameter of 80 nm and a CV $\leq$ 20 %. The number of binding sites per carrier particle was between 1 and 3.

The concentrations of the conjugate TAMRA-theophylline, the corresponding antibody and the carrier particles were kept constant in a specific series of experiments. The competitor (theophylline) concentration varied from 0.1 to 5000 nM. All incubations and measurements were carried out at room temperature (22 $\pm$ 2 °C). The competitive assay was carried out as follows: The TAMRA-theophylline conjugate was mixed with the corresponding unlabelled molecules. The mixture was then incubated with the corresponding unlabelled antibody at a final dilution of 1:10,000 at 37 °C for 15 minutes. In the final step, a colloid suspension of carrier particles in PBS assay buffer (140 mM NaCl, 3 mM KCl, 8 mM $Na_2HPO_4$, 1.5 mM $KH_2PO_4$, pH 7.4, 0.05% Tween 20) was added and the whole mixture was incubated at 37 °C for an additional 15 minutes. It was shown independently that antibody and Protein A coated carrier particles could be premixed yielding similar results.

The optical set up was as follows: ConfoCor® (Carl Zeiss, Jena/EVOTEC BioSystems AG, Hamburg) equipped with a standard filter set for excitation with a helium-neon laser (543 nm line, 40 $\mu$W, Uniphase), C-APOCHROMAT 40x/1.2 objective (Carl Zeiss Jena), pinhole 50 $\mu$m. The photon count signal was auto-correlated over 20 seconds.

Evaluation of the auto-correlation curves was carried out with a Marquardt nonlinear least-square fitting routine using the following two-component model corresponding to free and bound conjugate:

$$G(\tau) = \left[1 - T + T\exp\left(\frac{-\tau}{\tau_T}\right)\right] N^{-1} \left[\frac{1-Y}{\left(1 + \dfrac{\tau}{\tau_{free}}\right)\sqrt{1 + \dfrac{r_0^2}{z_0^2}\dfrac{\tau}{\tau_{free}}}} + \frac{Y}{\left(1 + \dfrac{\tau}{\tau_{bound}}\right)\sqrt{1 + \dfrac{r_0^2}{z_0^2}\dfrac{\tau}{\tau_{bound}}}}\right]$$

(9)

where T is the average fraction of dye molecules in the triplet state with relaxation time t; N is the total average number of fluorescent molecules in the observation volume; Y is the relative concentration fraction of bound conjugate; $t_{free}$ and $t_{bound}$ define the average time (diffusion time) detected for free and bound conjugate molecules, respectively: $r_0$ and $z_0$ are the lateral and axial distances between the coordinate where the Gaussian emission light distribution reaches its maximum value and the point where the light intensity decreases to $1/e^2$ of the maximum value (observation volume).

The Feldman equations, which describe the competition of conjugate and corresponding unlabeled molecules for binding to a common receptor molecule, were solved numerically using MathCad and Scientist. The experimental competition curves were fit to equations 1 and 8, with the parameters $K_1$, $K_2$, which are the $K_D$-values for the conjugate and the competitor, respectively, number of receptor molecules per carrier particle, N, and the concentration of carrier particles, $[P]_0$, and conjugate, $[L]_0$, using the Levenberg-Marquardt fitting routine implemented in the program Scientist.

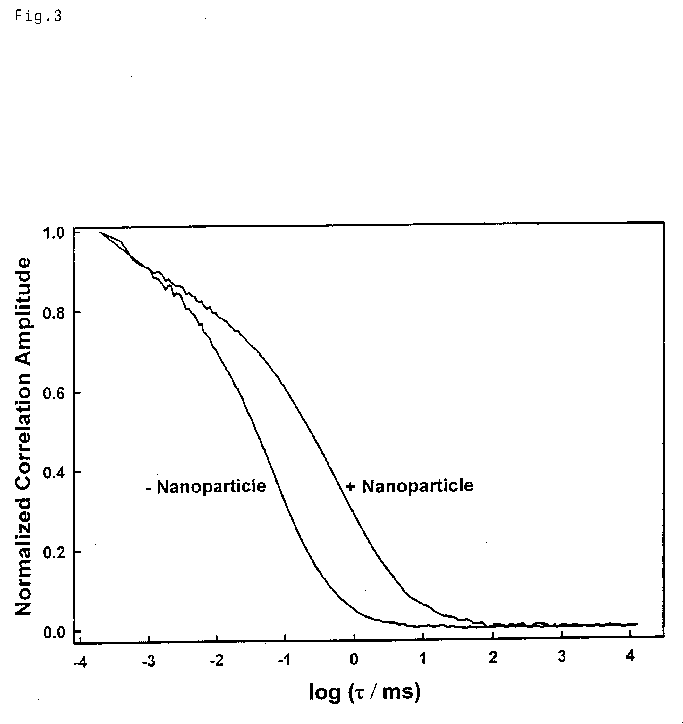

**Figure 3** shows normalized autocorrelation curves of the fluorescence emission of TAMRA-theophylline and its complex with anti-theophylline antibody and carrier particles coated with protein A. The carrier particles varied only slightly from one another in size with a mean diameter of about 90 nm. The small diameter as well as the narrow size distribution account for the high reproducibility of the FCS results.

The diffusion times for (i) unbound TAMRA-theophylline and (ii) the complex consisting of TAMRA-theophylline, anti-theophylline antibody and carrier particles coated with protein A were 70 and 860 $\mu$s, respectively. The amount of TAMRA-theophylline used resulted in 3.4 particles per observation volume, corresponding to a concentration of 22.6 nM given a focus size of $0.25 \times 10^{-15}$ liter.

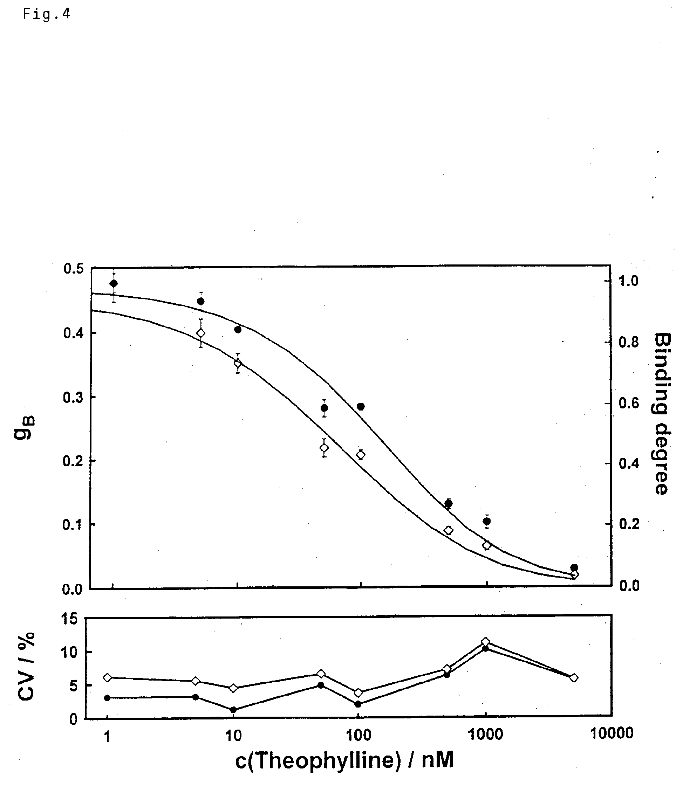

In the top panel of **Figure 4,** the correlation amplitude $g_B$ (0) and the degree of binding (•) of TAMRA-theophylline bound to carrier particles ($\varnothing$ = 80 nm) are plotted versus concentration of competing unlabelled theophylline. The solid lines are a simultaneous fit of both data sets to equations 1 and 8 yielding the parameters: $K_1 = 3.1 \times 10^{-13}$ M, $K_2 = 2.5 \times 10^{-12}$ M, $[P]_0 = 14$ nM, N = 1.57 and $[L]_0 = 22.6$ nM. In the bottom panel of Fig. 4, the CV-values of the corresponding data points in the top panel are plotted.

The $IC_{50}$ value calculated from a plot of binding degree, Y, versus theophylline concentration was about 140 nM. When the correlation amplitude, $g_B$, of the TAMRA-theophylline complex was plotted against theophylline concentration, the $IC_{50}$-value is shifted slightly lower towards concentrations of approximately 65 nM.

The mean number of anti-theophylline antibodies immobilised onto the surface of a carrier particle was calculated to be 1.57. This number is rather small, but agrees with the small change in particle number from 3.4 to 2.1 measured in presence of 1000 and 1 nM theophylline, respectively. The calculated concentration of carrier particles is 14.2 nM and the $K_D$ values for TAMRA-theophylline and the competitor theophylline are $3 \times 10^{-13}$ and $2.5 \times 10^{-12}$ M, respectively.

These binding affinities appear to be somewhat high compared with typical antigen-antibody $K_D$ values of $10^{-12}$ to $10^{-9}$ M. The fit is strongly dependent on the parameters conjugate concentration $[L]_0$, number of receptors per particle N and particle concentration $[P]_0$. For example, if the $K_1$ value is fixed at $10^{-11}$ M, the resulting fit is of similar quality to that made by varying $K_1$, and the resulting $K_2$ is $8.3 \times 10^{-11}$ M. The parameters $[P]_0$ and N did not change significantly compared to the fit made with variable $K_1$, and were calculated to be 14.1 nM and 1.59, respectively. Taken together, the data agreed with the proposed model and the prediction of greater assay sensitivity when using the correlation amplitude $g_B$ could be proven.

### Example 2: 17-β-Estradiol-Assay

Accurate measurement of the circulating levels of estradiol is important for assessing ovarian function and monitoring follicular development for assisted reproduction protocols. Estradiol plays an essential role throughout the human menstrual cycle (Speroff L. Glass RH, Kase NG (editors), Clinical Gynecologic Endocrinology and Infertility, 4th edition, Baltimore: Williams and Wilkins, 1989:91-119).

The 17-β-estradiol conjugate was synthesized by EVOTEC BioSystems AG (Hamburg). The anti-estradiol-antibody was kindly provided by Dr. Schumacher (Institute of Fertility Research, Hamburg). 17-β-estradiol was obtained from Sigma. The protein A coated carrier particles (Protein A Ferrofluid™) with a mean diameter of 160 nm were from Immunicon. The optical set-up was the same as described in Example 1. The photon count signal was auto-correlated over 60 seconds. Data evaluation and fitting procedures were the same as described in Example 1.

The concentration of the conjugate (TAMRA-estradiol), the corresponding antibody and the carrier particles were kept constant in a specific series of experiments. The competitor (17-β-estradiol) concentration varied from 0.1 to 5000 nM. All incubations and measurements were carried out at room temperature (22 ± 2 °C). The competitive assays were carried out as follows: The TAMRA conjugate of estradiol was mixed with the corresponding unlabelled molecules. The mixture was then incubated with the corresponding unlabelled antibody at a final dilution of 1:10,000 at 37 °C for 15 minutes. In the final step, a colloid suspension of carrier particles in PBS assay buffer (140 mM NaCl, 3 mM KCl, 8 mM $Na_2HPO_4$ 1.5 mM $KH_2PO_4$, pH 7.4, 0.05% Tween 20) was added and the whole mixture was incubated at 37 °C for an additional 15 minutes. Some experiments with JA190-estradiol conjugates were carried out in E-NAP buffer (200 mM sodium acetate, 150 mM NaCl, 0.2 % BSA, pH 4). It was shown independently that antibody and Protein A coated carrier particles could be premixed yielding similar results.

Since it is suspected that coupling a fluorophore to a molecule as small as estradiol could have an impact on its binding specificity and affinity to its antibody, a set of fluorescent estradiol conjugates were synthesized and studied. The results are summarized in **Table 2.** All estradiol conjugates, except for the BODIPY™ -derivative, bound to an anti-estradiol antibody with similar affinity. Binding of the BODIPY™ derivative could not be evaluated because of the occurence of severe aggregation, most probably due to the hydrophobicity of the dye. Of the remaining conjugates, only Cy5-estradiol exhibited a significant decrease in affinity for the anti-estradiol antibody. All other conjugate-antibody interactions remained strong. The $IC_{50}$ values for the bound conjugates were in the nanomolar range, except for the Cy5 conjugate, which had an $IC_{50}$ of > 20 μM due to the low affinity of the anti-estradiol antibody to the Cy5 conjugate. TAMRA-estradiol was used for further assay evaluation.

In contrast to the theophylline assay described in experiment 1, protein A-coated carrier particles with a mean diameter of 160 nm and a relative broad distribution of diameter were used. This resulted in markedly worse FCS results even though measurement time was extended to 60 seconds instead of 20 seconds. On the other hand, the antibody binding capacity of the carrier particles used in experiment 2 was much higher than the antibody binding capacity of the carrier particles used in experiment 1.

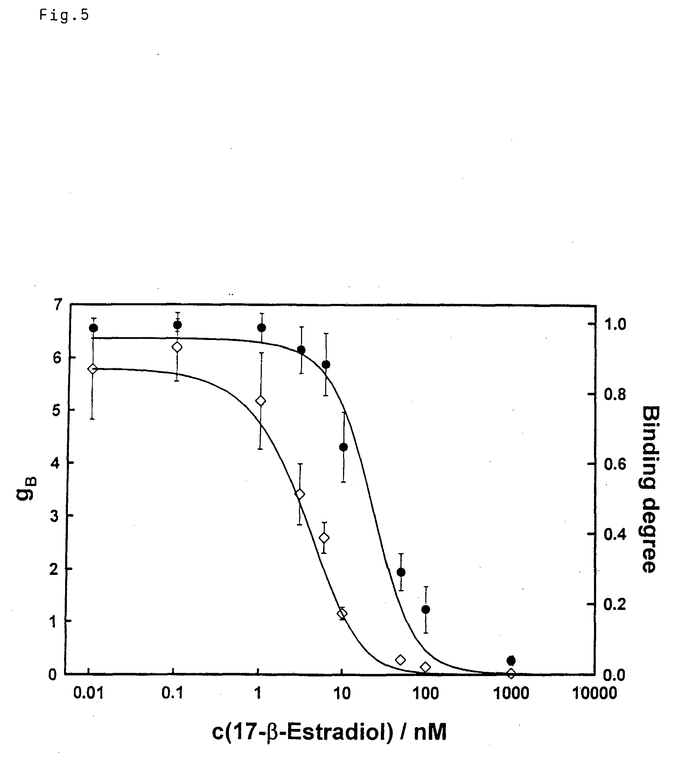

Theoretically, the change in particle number should be more pronounced the greater the number of antibodies per carrier particle. Furthermore, it is expected that the assay will become much more sensitive when $g_B$ is used as the read-out parameter instead of the degree of binding. The mean particle number per FCS observation volume decreases from 1.7 to 0.17 upon 100 % binding. The $IC_{50}$ values obtained when using the correlation amplitude and the binding degree are 3 and 20 nM, respectively. **Figure 5** shows a plot of correlation amplitude $g_B$ (◊) and binding degree (●) of TAMRA-estradiol bound to carrier particles (∅ = 160 nm) versus concentration of competing unlabelled estradiol. The solid lines are a simultaneous fit of both data sets to equations 1 and 8 yielding the parameters: $K_1$ = 1.4 x $10^{-12}$ M, $K_2$ = 5.9 x $10^{-13}$ M, $[P]_0$ = 0.17 nM, N = 34 and $[L]_0$ = 15 nM. The difference in the $IC_{50}$ values obtained from competition experiments when using correlation amplitude, $g_B$, versus the binding degree is greater than with the theophylline assay. This is in agreement with the model predicting this difference to be greater the more binding sites presented per carrier particle.

**Example 3: Human chorionic gonadotropin assay**

Human chorionic gonadotropin (hCG) is a glycoprotein with two non-covalently bound subunits. The α-subunit is similar to those of luteinizing hormone (LH), follicle- stimulating hormone (FSH), and thyroid-stimulating hormone (TSH) (Russel PT "Pregnancy and fetal function". In: Kaplan LA, Pesce AJ, Clinical Chemistry: theory, analysis and correlation. St. Louis, CV Mosby, 572, 1989; Kaplan et al. "Human chorionic gonadotropin". In: see above, 938 - 944). The β-subunit of hCG differs from other pituitary glycoprotein hormones, which results in ist unique biochemical and immunological properties. HCG is synthesised by the cells of the placenta and is involved in maintaining the corpus luteum during pregnancy. It is detected as early as one week after conception. In pregnancy, the levels of hCG increase exponentially for about 8 to 10 weeks after the last menstrual cycle. Later in pregnancy, about 12 weeks after conception, the concentration of hCG begins to fall as the placenta begins to produce steroid hormones. Other sources of elevated hCG values ectopic pregnancy, threatened abortion, micro-abortion and recent termination of pregnancy, or chorionic-, embryonal- or teratocarcinoma.

Monoclonal mouse anti-α-hCG antibody (Biotrend) was coupled to Alexa-586™ according to manufacturers protocol (Molecular Probes). From the ratio of absorption at 280 nm and 577 nm a dye loading of 4.7 Alexa molecules per protein was estimated. Another monoclonal mouse anti-β-hCG antibody (Chemicon) was biotinylated using biotin-LC-sulfo-NHS-ester (Pierce) according to standard protocols. As analyte highly purified hCG (Chemicon) was used. The assay protocol was as follows: Incubation of Alexa-568™ coupled anti-α-hCG antibody and hCG at 37°C for 15 minutes. Subsequently, biotinylated anti-β-hCG antibody and carrier particles (Streptavidin MicroBeads™, Miltenyi Biotech) with a mean diameter of 100 nm were added after incubating each step for 15 minutes, respectively. This protocol can be simplified by premixing Alexa-586™-anti-α-hCG, biotinylated anti-β-hCG antibodies and carrier particles for 15 minutes at 37 °C and adding unknown analyte to the mixture. The ternary binding reaction was determined to be completed after less than 5 minutes (data not shown).

The optical set-up was the same as described in Example 1. The photon count signal was auto-correlated over 5 minutes. Data evaluation and fitting procedures were the same as described in Example 1.

HCG is a large molecule and thus allows for the setup of a carrier particle immuno sandwich assay. In the assay, a pair of monoclonal mouse antibodies were used: one directed against the $\alpha$-subunit, the other against the $\beta$-subunit of hCG. Since the $\alpha$-subunit of hCG is similar to those of LH, FSH and TSH, this sandwich assay can be easily extended to these analytes by simply exchanging the anti-$\beta$-hCG-antibody. For the hCG-sandwich-assay streptavidin-coated carrier particles with a very broad size distribution were used. In contrast to competition experiments, the binding degree of carrier particle bound complexes rised with increasing hCG concentration because the detection antibody (Alexa-anti-$\beta$-hCG) is bound to the carrier particles via hCG antigen (see Fig. 1b). Above a threshold where all carrier particles are saturated by hCG., increasing hCG concentrations capture detection antibodies thus decreasing the percentage of carrier particle bound complexes. In a diagnostic hormone assay, this case should be prevented by raising the binding capacity of the carrier particles. The transition range of the degree of binding determined by FCS is shifted to lower hCG concentrations with respect to the transition range of the autocorrelation amplitude of the carrier particle bound complex, the more binding sites are immobilised per carrier particle. Consequently, it is possible to extend the dynamic range of a sandwich carrier based assay compared to conventional sandwich immuno assays by an overlay of the FCS binding degree and autocorrelation amplitude data.

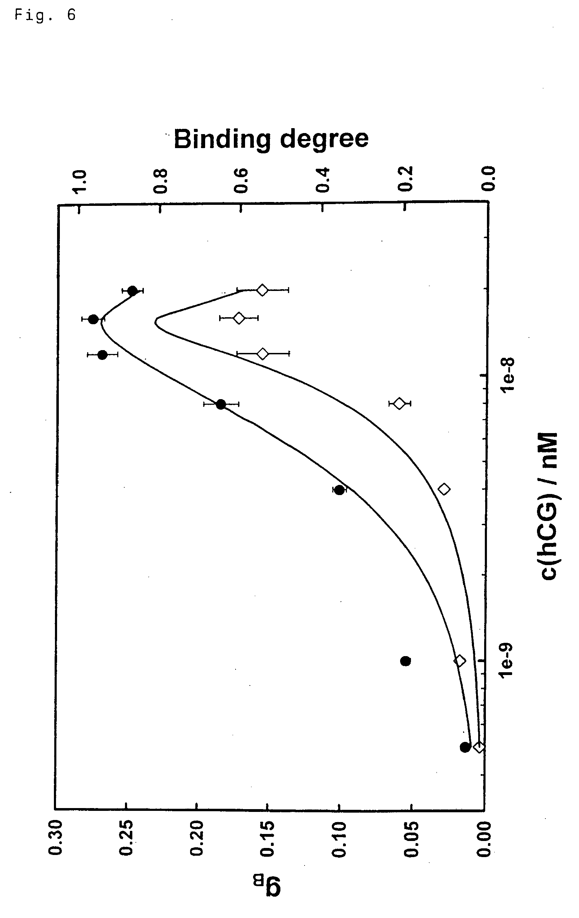

**Figure 6** shows the correlation amplitude $g_B$ ($\diamond$) and degree of binding (*) of a sandwich assay consisting of Alexa-586™ labelled anti-$\alpha$-hCG antibody and anti-$\beta$-hCG bearing carrier particles in the presence of different hCG concentrations. The determined parameters are: $K_\alpha$ = 3.4 x $10^{-11}$ M, $K_\beta$ = 4.1 x $10^{-12}$ M, $[P_0]$ = 5.4 nM, N = 2.6 and $[L_0]$ = 16 nM. $K_\alpha$ is defined as $K_D$ between Alexa-586™ labelled anti-$\alpha$-hCG antibody and hCG under the assumption that $K_D$ is not substantially influenced by binding of hCG to anti-$\beta$-hCG bearing carrier particles. $K_\beta$ is defined as $K_D$ between anti-$\beta$-hCG (which is attached to the carrier particles) and hCG under the assumption that $K_D$ is not substantially influenced by binding of hCG to anti-$\alpha$-hCG antibody.

## Example 4: Estradiol competition assay

Estradiol plays an essential role in the human menstrual cycle, being one of the most active estrogen hormones. Accurate quantification of the circulating level of estradiol (physiological concentration ~ 1 nM) is important for assessing ovarian function and monitoring follicular development for assisted reproduction protocols. 5 ml of methanol containing 55 mg 6-ketoestradiol-(O-carboxymethyl)-oxime and 18 mg N-hydroxysuccinimide (NHS, Merck) were prepared and 24 $\mu$l of N,N'-diisopropylcarbodiimide (DIC, Fluka) were added. The mixture was stirred for 2 hrs at 25°C. During 30 min a total volume of 75 ml containing 115 mg of 1,8-diamino-3,6-dioxaoctan (Merck) was added dropwise. Then 2.4 $\mu$l DIC was added and the mixture was stirred for 16 hours at 25°C. Removal of the solvent under reduced pressure and subsequent flash chromatography on silica gel 60 (Merck) yielded the amino-functional estradiol derivative. 1 mg of the derivative was dissolved in 50 $\mu$l dimethylformamide (DMF, Fluka) and treated with 1.1 mg of 5-carboxytetramethylrhodamine succinimidyl ester in 200 $\mu$l DMF. The mixture was stirred for 16 hrs and the solvent removed under reduced pressure. Estradiol-Tamra was purified by RP-HPLC and characterized by mass spectrometry (MALDI ToF, calc. mass: 902, found mass: 903 [M+H]+), UV/Vis ($\lambda_{max}$ = 558 nm) and fluorescence spectroscopy ($\lambda_{exc}$ = 543 nm, $\lambda_{em}$ = 588 nm).

17-b-Estradiol was purchased from Sigma and dissolved in ethanol as instructed by the supplier. 5-Tamra-Estradiol was synthesized by Evotec BioSystems AG as described abow. Rabbit-anti-estradiol serum was stored in experimental buffer at 4°C. Protein A Ferrofluid carrier particles were purchased from Immunicon. Experimental buffer was PBS (8 g NaCl, 0.2 g KCl, 1.44 g $Na_2HPO_4$, 0.24 g $KH_2PO_4$ per liter; pH 7.4; substances from Merck) with 0.05% Pluronic (from Sigma). Nine samples with a 17-b-estradiol titration (0.01 to 1000 nM) were prepared by mixing pre-diluted (in experimental buffer) 17-b-estradiol, anti-estradiol antibodies (1:5000 final dilution) and 5-Tamra-estradiol (final concentration: 5 nM). After incubation (15 min at 37°C) 10 $\mu$l Protein A carrier particles (1:30 final dilution, stock concentration: 5 nM) were added and a final volume of 30 $\mu$l was adjusted with experimental buffer. Samples were incubated (15 min at 37°C) and either measured immediately or stored at 4°C for 24 hours and more before being measured in a 8-well Nunc chamber. Each sample was measured 10 times for 2 seconds.

The confocal microscope 'ConfoCor' (Carl Zeiss, Jena - Evotec BioSystems AG, Hamburg, Germany) was equipped with the hardware to collect photon count histograms. Fluorescent intensity distribution analysis was performed by fitting the histograms with a model including one or two fluorescent species to yield the molecular brightness values as well as the concentrations. For graphic presentation of the final data the software Origin 5.0 (Microcal) was used. For the actual measurement 15 ul aliquots were placed on the glass surface of a Nunc chamber and the focus was adjusted 150 $\mu$m above the surface. The focus was deflected using a mirror setup with a frequency of 25 Hz and an amplitude of 100 $\mu$m. During the measurement time (i.e. 2 to 5 sec) the table moved once across 500 $\mu$m so that an area of 100 x 500 $\mu$m was scanned. The samples containing fluorophores were excited at 543 nm with a 1.5 mW Helium-Neon laser and intensity was adjusted with attenuation filters, so that the fluorescence triplett fraction of a pure 1 nM Tamra solution was less than 15%. Under these conditions Tamra had a molecular brightness of 30 to 40 kHz. Scattered light was cut off with a 590 DF40 filter in the detection pathway. For photon detection an avalanche photo diode (APD) was used. The molecular brightness of fluorophores is expressed in photon counts per time, i.e. Hertz. The concentration, $c_i$, of free dye and labeled protein was calculated from the particle number, $N_i$, of the respective component in FCS according to $c_I = N_I /(N_A.V)$ with the focal volume, $V$, and the Avogadro-number, $N_A$. With the optical setup used, a solution with one particle in the confocal volume at a time has the concentration of approximately 1 nM.

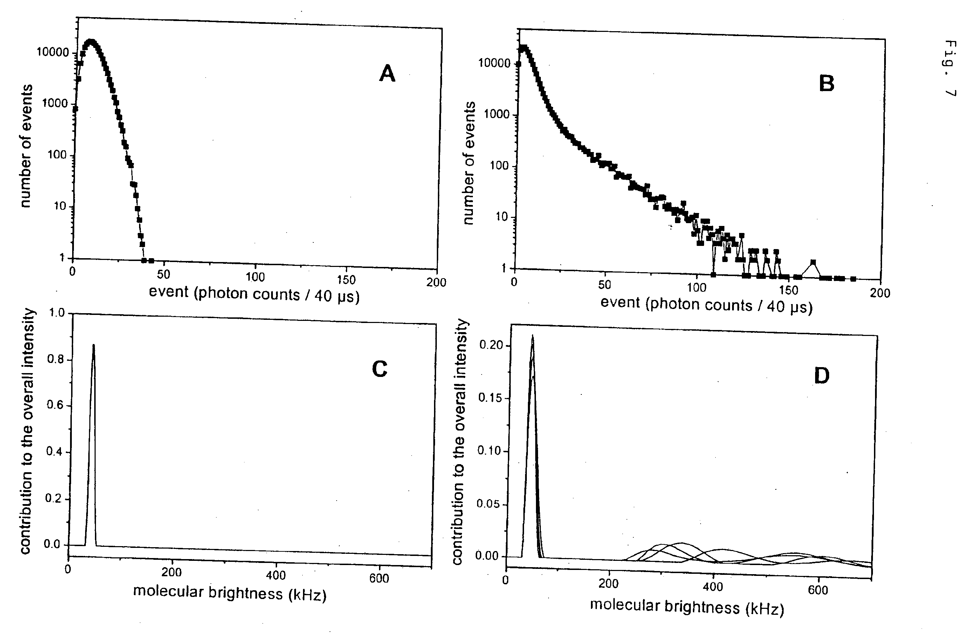

**Figure 7** shows a photon count histogram of (A) 5 nM unbound conjugate (estradiol-Tamra) in the presence of 1 $\mu$M competitor (estradiol) or (B) in the absence of competitor at full complex formation with carrier particles. The number of events (y-axis) is plotted on a logarithmic scale which emphasizes small numbers. Total number of photons counted within the measurement time was 1,848,127 for the "narrow" distribution (A) and 1,504,390 for the "broad" distribution (B). This shows that a 19 % quench coincides with the complex formation, which on ist own would also provide a readout but with a very low dynamic range and low information content. Inverse transformation with regularisation (ITR analysis) of (C) unbound conjugate, 3 curves are overlaid, and (D) of conjugate bound to carrier particles, 4 curves are overlaid. Y-axis shows the contribution of the respective molecular brightness to the overall intensity; the integral under the peak is proportional to the particle number. Note that the scales in (C) and (D) are different because the concentration of free ligand has dropped. Figure 7 (C) shows that a single species is contained in the narrow distribution (A) with a molecular brightness of 42 kHz. In contrast, Figure 7 (D) showing the ITR analysis of (B), reveals additional species with a much higher molecular brightness above 200 kHz.

A multi component fit of the photon distribution yields the values for concentration c and specific brightness q for a model with two or more species. In case of carrier particle assays two species are used, the first describing the free conjugate (e.g. labelled antibody) with its molecular brightness similar to that of the free dye. The second species is the carrier particle complexing the conjugate, thus increasing the local density of bound molecules. Carrier particles (diameter preferably < 1 $\mu$m) fit into the confocal volume and appear as single particles with the molecular brightness values of the bound conjugates adding up to a much higher brightness. The straight forward fitting strategy is shown in the next figure.

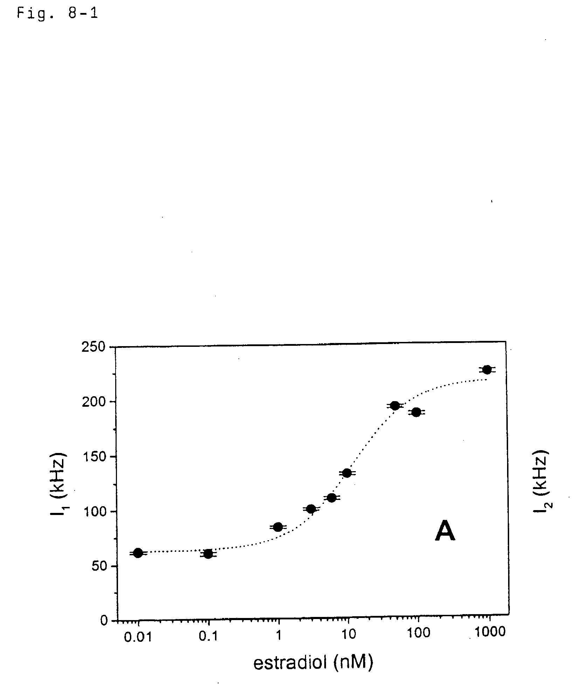

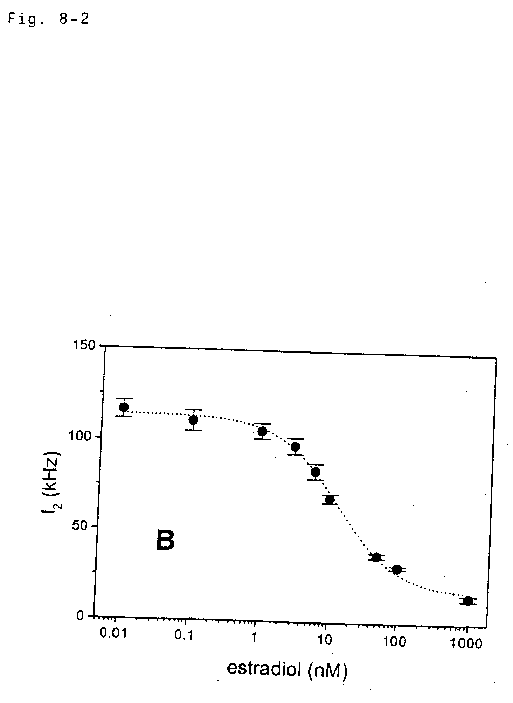

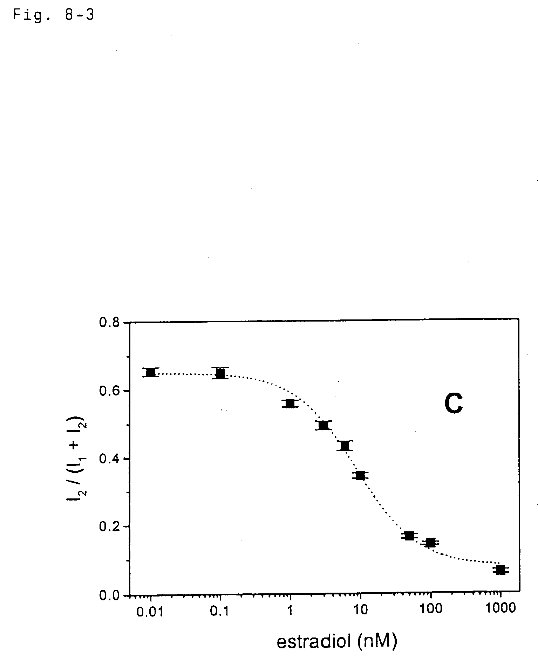

**Figure 8** shows a competition assay with antibody-coated carrier particles (0.18 nM) binding fluorescently labeled estradiol (5 nM). As a linker system protein A was coupled covalently onto the carrier particles. Competitor (unlabeled estradiol) was added at concentration as indicated in the graph. Fixed values were $q_1 = 42$ kHz and $c_2 = 0.18$ particles per confocal volume. The intensities were calculated according to $I_x = q_x \cdot cx$. The dotted lines show hyperbolic fits to determine $IC_{50}$ values, being (A) $11.9 \pm 2.4$ nM; (B) $13.3 \pm 1.3$ nM; (C) $8.8 \pm 1.1$ nM. Samples were measured 10 times for each 2 seconds in experimental buffer at room temperature.

Photon count histograms (Figure 7A and B) were analysed with fluorescence intensity distribution analysis multi-component fitting to yield the molecular brightnesses ($q_x$) and concentrations ($c_x$) of each sample. At full complex formation in the absence of competitor most conjugate was bound, so that $I_1$ (free conjugate) had a low value (Figure 8A) and $I_2$ (carrier particles with bound conjugate) is high (Figure 8B). Unlabeled estradiol competes with the bound estradiol-Tamra and can therefore be quantified through the changing intensities. For the competition curve 9 samples were prepared with unlabeled estradiol between 0.01 and 1000 nM. Values of $c_1$ ranged from 1.3 to 5.4 particles per confocal volume and $q_2$ from 80 to 670 kHz. The maximal molecular brightness values ($q_1$:42 kHz, $q_2$:670 kHz) suggest that up to 15 estradiol-Tamra molecules were bound per carrier particle under the assumption that the specific brightness of the conjugate remains unchanged when it binds to nanoparticles. However, the total intensity decreased from 1850 kHz to 1500 kHz (Figure 7A and B) showing a degree of 19% quenching upon complex formation. This quench is solely caused by the bound conjugate fraction. The competitor concentration where the half-maximal intensity is reached ($IC_{50}$) was determined by a hyperbolic fit. $IC_{50}$ values were similar when determined from $I_1$, $I_2$ or $I_2 / (I_1+I_2)$ being $11.9 \pm 2.4$ nM, $13.2 \pm 1.3$ nM and $8.8 \pm 1.1$ nM, respectively. The same assay setup has been measured with FCS (see Example 2) and a similar $IC_{50}$ value of 20 nM has been determined for estradiol. As seen by the small error bars even at 2 second measurement time mean standard deviations are very low with 1.5 kHz for $I_1$ and 3.7 kHz for $I_2$, being equivalent to CV values (standard deviation / mean $\cdot$ 100%) of 1.6% and 5%. $I_2 / (I_1+I_2)$ had a mean CV of 3.4%.

## Example 5: Sandwich-assay (hCG)

Human chorionic gonadotropn (hCG) is a placental hormone that stimulates secretion of the pregnancy-sustaining steroid progesterone. The hCG concentration is commonly used as an indicator for pregnancies with basal (no pregnancy) serum levels $\geq$ 100 pM, elevated levels in early pregnancy (first trimester) >> 10 nM and in late pregnancy (second and third trimester) 1 - 10 nM. Moreover, abnormal concentrations of hCG are associated with complications in pregnancy and other pathological diagnosis.

Recombinant human hCG and anti-b-hCG antibody were purchased from Chemicon and stored as instructed by the supplier. Anti-b-hCG antibody was biotinylated according to standard procedures and stored at a concentration of 440 nM in PBS at 4°C . Anti-a-hCG antibody was purchased from Biotrend and labeled with Alexa 546 (Kit by Molecular Probes) according to manufacturers instructions. Streptavidin-Microbeads from Miltenyi were used undiluted (concentration: 1 nM). Experimental buffer was PBS with 0.05% Tween 20 (from Sigma). As shown in Table 3 three different experimental setups were used, each with different concentrations of antibodies, which were pre-diluted in experimental buffer, and Streptavidin carrier particles. Of each antibody concentration seven to nine samples with a final volume of 30 μl containing varying hCG concentrations were prepared. The pipetting order and incubations setups are shown in Table 3. It should be noted that for all carrier particle assays the order of pipetting can be varied. Identical results were obtained when analyte was added to a mixture of carrier particles, capture antibody and detection antibody. Also, incubation at room temperature is equally successful. Each sample was measured 10 times for 5 seconds. The confocal microscope 'ConfoCor' (Carl Zeiss, Jena - Evotec BioSystems AG, Hamburg, Germany) was equipped with the hardware to collect photon count histograms. Fluorescent intensity distribution analysis was performed by fitting the histograms with a model including one or two fluorescent species to yield the molecular brightness values as well as the concentrations. For graphic presentation of the final data the software Origin 5.0 (Microcal) was used. For the actual measurement 15 μl aliquots were placed on the glass surface of a Nunc chamber and the focus was adjusted 150 μm above the surface. The focus was deflected using a mirror setup with a frequency of 25 Hz and an amplitude of 100 μm. During the measurement time (i.e. 2 to 5 sec) the table moved once across 500 μm so that an area of 100 x 500 μm was scanned. The samples containing fluorophores were excited at 543 nm with a 1.5 mW Helium-Neon laser and intensity was adjusted with attenuation filters, so that the fluorescence triplett fraction of a pure 1 nM Tamra solution was less than 15%. Under these conditions Tamra had a molecular brightness of 30 to 40 kHz. Scattered light was cut off with a 590 DF40 filter in the detection pathway. For photon detection an avalanche photo diode (APD) was used. The molecular brightness of fluorophores is expressed in photon counts per time, i.e. Hertz. The concentration, $c_i$, of free dye and labeled protein was calculated from the particle number, $N_i$, of the respective component in FCS according to $c_i = N_i /(N_A \cdot V)$ with the focal volume, $V$, and the Avogadro-number, $N_A$. With the optical setup used, a solution with one particle in the confocal volume at a time has the concentration of approximately 1 nM.

**Table 3:** Experimental setup of hCG Sandwich assay.

|  | 1. experiment | 2. experiment | 3. experiment |
|---|---|---|---|
| Alexa-anti-a-hCG | 40 nM | 25 nM | 12.5 nM |
| hCG | 0.1 to 75 nM | 0.25 to 25 nM | 0.25 to 25 nM |
| *15 min incubation at 37°C* | | | |
| biotinylated anti-b-hCG | 35 nM | 20 nM | 10 nM |
| *15 min incubation at 37°C* | | | |
| Streptavidin nanoparticle solution | 33% | 20% | 10% |

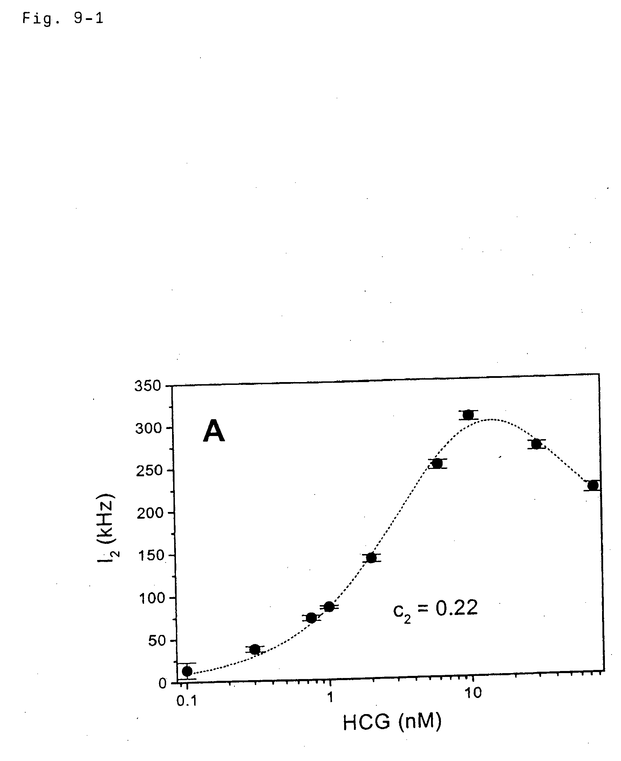

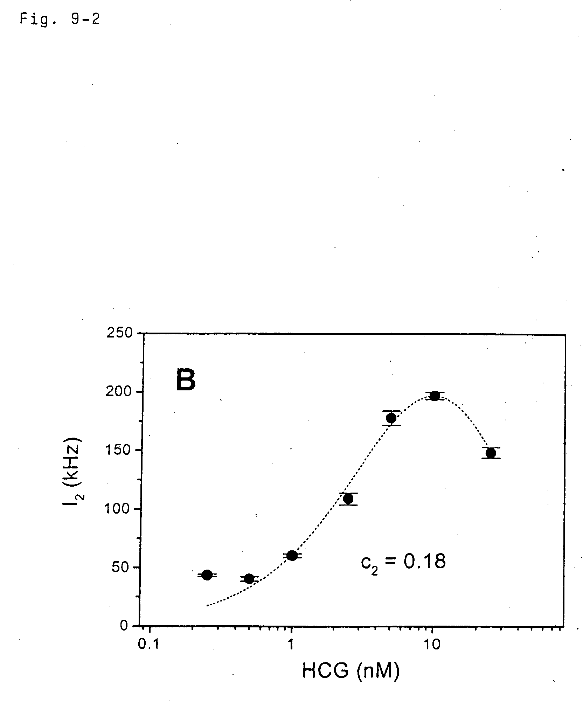

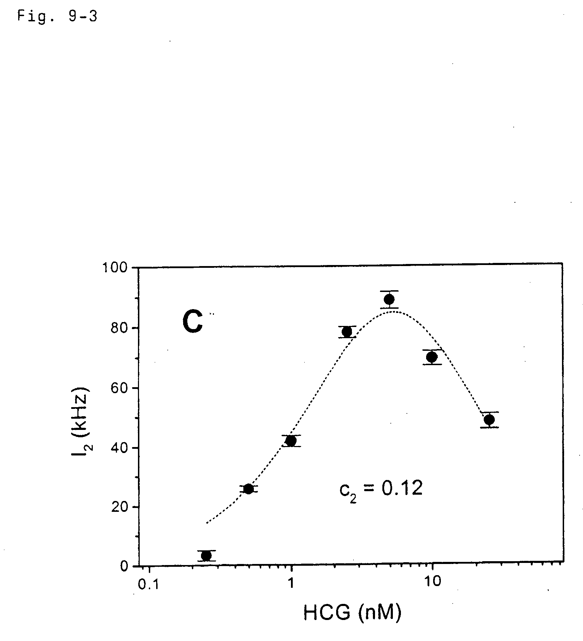

**Figure 9** shows a sandwich assay, using antibody coated carrier particles binding hCG. As a linker system the streptavidin-biotin interaction was used. The second (detection) antibody was labeled and accumulated on the carrier particle when sandwiching hCG, which was added in rising concentrations. In a two-component fit the fixed concentrations were $q_1 = 50$ kHz and $c_2 = 0.22$ (A), 0.18 (B), 0.12 (C). Antibody concentrations (Table 3) were: 35 nM coating antibody, 40 nM detection antibody (A), 20 nM coating antibody, 25 nM detection antibody (B), 10 nM coating antibody, 12.5 nM detection antibody (C). Samples were measured 10 times for each 5 seconds. Conditions as in Figure 7.

HCG is a heterodimer consisting of subunits a and b. In the sandwich assay the b-epitope of hCG was bound by a monoclonal antibody (anti-b-hCG) which was biotinylated and linked to streptavidin-coated beads. The a-subunit was recognized by a second monoclonal antibody which was labeled with Alexa 546 (Alexa-anti-a-hCG). The carrier particle intensity (Figure 9) rises with increasing hCG concentrations due to accumulation of labeled antibodies on the carrier particles, sandwiching hCG. A characteristic of this systems is a declining signal when hCG is overtitrated because all antibody binding sites are saturated with antigen and therefore ternary complex formation is not supported anymore. This decline is less steep and occurs later, when high concentrations of antibodies are used. Also, the carrier particle intensity is higher at high concentrations, not only because their concentration is greater ($c_2 = 0.22$ in Figure 9A, 0.12 in Figure 9C) but also because $q_2$ reaches higher values. Maximal values of $q_2$ (as yielded from the fit or calculated according to $I_2 / c_2$) are 1400 kHz in experiment 1, 1080 kHz in experiment 2 and 730 kHz in experiment 3. This higher saturation of the carrier particles is caused by an increased overall binding degree of antigen to Alexa-anti-a-hCG and to anti-b-hCG at high antibody concentrations. As a main feature this systems offers a dynamic range of at least one order of magnitude and robust data with a mean standard deviation of 5 kHz being equal to a CV of 2% at high binding and a measurement time of 5 s.

In the examples 4 and 5 above, two types of assays according to the present invention, namely the competition and the sandwich variant, have been demonstrated. In the competition assay the decreasing brightness of the carrier particles indicated the presence of a competitor, i.e. the unlabeled protein which may be secreted by cells or is to be analyzed in a test sample. When full competition is achieved the carrier particles are not visible having no conjugate bound and at the same time the concentration of free conjugate increases and therefore serves as an additional read out (Figure 8).

In case of the sandwich assay the detection antibody is labeled with a fluorescent marker. No washing is required because unbound detection antibody can be distinguished easily from bound by monitoring the carrier particle brightness according to the present invention. In the hCG sandwich assay, carrier particles were present at concentrations above 100 pM and loaded with at least 25 labeled antibodies at maximum of carrier particle complex intensity, as indicated by a complex brightness of $q_2$ = 1000 kHz compared to the brightness of free conjugate being $q_1$ = 40 kHz. Due to the good sensitivity of this method, the carrier particle number, $c_2$, may be reduced well below 0.01 particles per confocal volume. From the measurement of specific brightness very low and very high hCG concentration cannot be distinguished due to an overtitration effect (Figure 9). This point can be addressed very efficiently with the further developed EVOTEC reader where an FCS measurement is performed in parallel to the determination of specific brightness on the same data stream. The absolute hCG concentration of an unknown sample can be determined by either diluting the analyte or adding access of antibody coated carrier particles and FCS measurement. If the estimated hCG concentration decreases with higher dilutions, the hCG concentration was within the determination range. If the estimated hCG concentration shows a maximum while diluting the sample, the analyte concentration was higher than the upper concentration of the assay range. If an access of functionalized carrier particles is added to a reaction mixture, all detection antibodies are bound to carrier particles. In this case, though the brightness of the complexes could not be distinguished from unbound detection antibody, an FCS measurement reveals the enhanced diffusion time of the complexes, if the hCG concentration was beyond the determination range.

The sandwich as well as the competition NPIA based on the soluble carrier particles offers the opportunity to transform a well established ELISA into a homogeneous assay. Based on these principles various other types of interaction may be monitored which are not accessible to conventional techniques measuring the overall fluorescence intensity. Whereas in the demonstration assays antibodies were coupled to the carrier particles, other proteins can also be linked and the binding of an interacting protein is monitored, either having a fluorescent label itself or through detection with a labeled antibody. Therefore, assays according to the present invention can be extended to protein-protein, receptor-ligand, DNA-DNA or DNA-protein interactions. Obviously the first step in assay development would be the coupling of the protein or DNA to the carrier particle. Here, convenient linker systems can be used like the streptavidin - biotin interaction with a dissociation constant well under 1 pM or the tight binding of protein A to immunoglobulines. Also the protein can be linked covalently to a carrier with a reactive surface, having the benefit of a direct coupling but also an increased assay development time. Bacteria cell lines are established either displaying protein A and streptavidin or other target proteins directly on the surface. A further helpful application of carrier particles is the quantification of secreted proteins (e.g. cytokines) in a cellular assay especially if long incubation times are required. An antibody-coated carrier particle is added to the cells which binds the secreted molecules thus inhibiting an unspecific binding to the well surface. The secretion is then quantified after application of the labeled detection antibody, requiring no washing or additional supernatant transfer steps.

Further applications are shown in the following examples 6 and 7.

### Example 6: Protein Tyrrosine Phosphatase Pharmaceutical Screening Assay

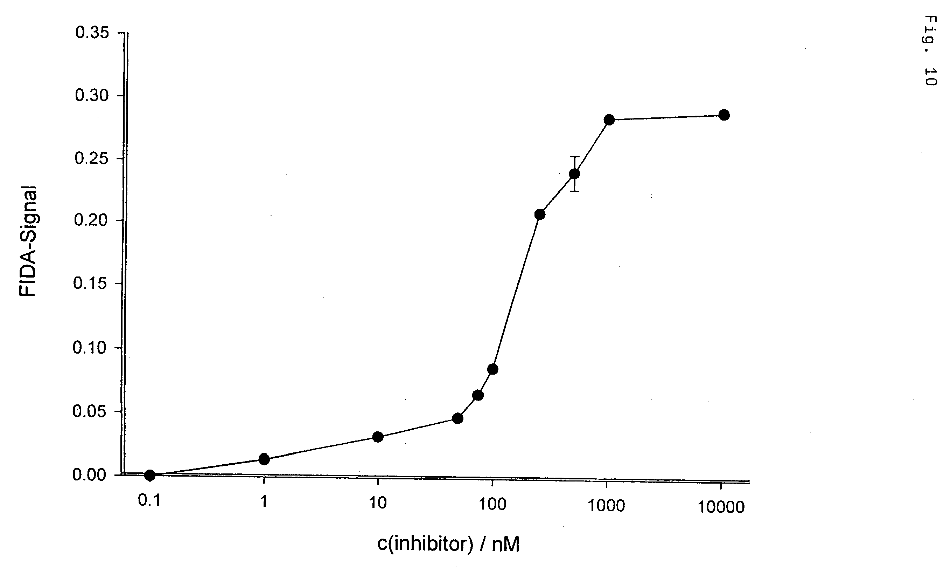

4 nM CD45 (BioMol) and the noted concentrations of inhibitor were incubated for 15 min at 25 °C. Subsequently biotinylated peptide-substrate and a mixture of TRITC-anti-phosphotyrosine antibody, streptavidin coated carrier particles and stop reagent $H_2O_2$ were added and incubated for 10 and 5 min at 25 °C, respectively. The substrate turnover was measured using the fluorescence intensity distribution analysis (FIDA) according to the present invention. With raising inhibitor concentration the specific brightness per particle increases (see **Figure 10**). The $IC_{50}$ of 200 nM agrees well with the value which has been measured using a conventional FCS assay. The CV-values were less than 1 % in presence of 1 nM and higher concentrations of inhibitor using a measurement time of 5 s. The only exception is an experiment at 500 nM inhibitor where the CV is below 5 %.

### Example 7: Protein Tyrosine Kinase Pharmaceutical Screening Assay

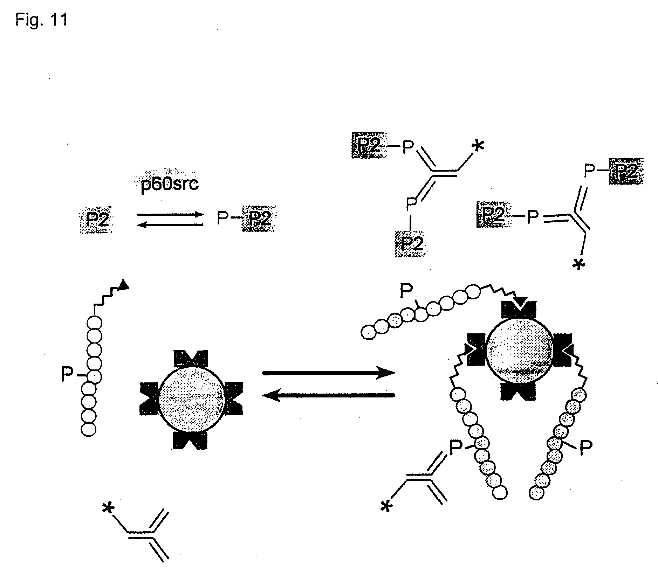

The p60src assay according to the present invention works as shown in **Figure 11.** At first p60src (Upstate Biotechnology) phosphorylates the P2 substrate. The phos-phorylated and biotinylated P1 peptide is depicted as string of beads with attached "P" (phosphate) and triangle (biotin). The phosphorylated P2 competes with P1 for binding to the TRITC-labeled anti-phosphotyrosine antibody. In absence of enzyme activity all fluorescent antibodies are bound to carrier particles via P1 which means maximal binding to carrier particles and correspondingly minimum particle number. The phosphorylated P2 catches the fluorescent antibody preventing the formation of complexes. In that case no binding to carrier particles occurs and maximal particle number will be measured. Potential inhibitors are incubated with the enzyme before the enzyme reaction is started by adding a mixture of P2 and ATP.

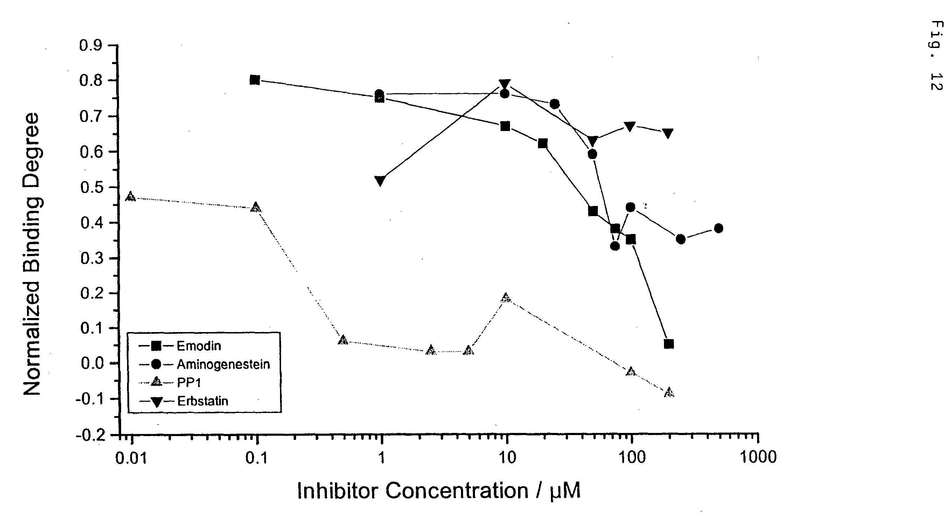

**Figure 12** shows dose-response curves of Emodin, Aminogenestein, Erbstatin and PP1 acting on p60src kinase. The $IC_{50}$ values of Emodin and Aminogenestein are about 50 to 100 $\mu$M. The $IC_{50}$ value of PP1 - a high potent inhibitor - is about 100 nM. The actual preparation of Erbstatin is estimated to be inactive.

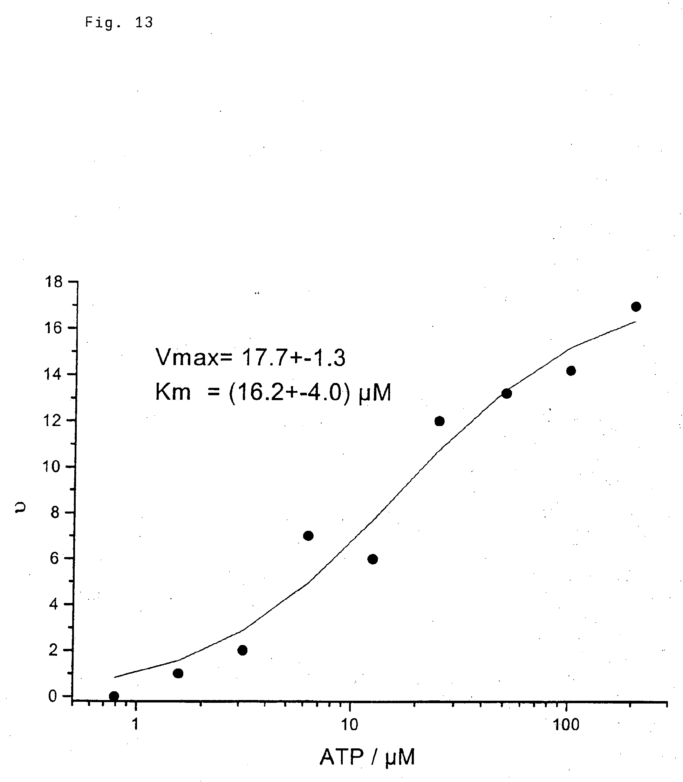

**Figure 13** shows the determination of Michaelis constant $K_M$. The binding degree is converted in relative turn over velocity (u) by u = |0.23 - Y|. The turn over rate rises with increasing ATP concentrations. The data were fit to the Michaelis model using a non least square algorithm yielding a $K_M$ of (16.2 $\pm$ 4.0) $\mu$M.

## Claims

1.   A homogeneous fluorescent binding assay method comprising the steps of:

   • providing carrier particles in solution with at least one binding site on each of said carrier particles;
   • providing at least first and second components; with the first being a substance to be tested, the second being tagged with a fluorescent substance;
   • exposing said carrier particles to the first and second components, to cause a reaction between said first and/or second components and said at least one binding site on said particles; whereby the number of fluorescently tagged components to said carrier particles changes and wherein complexes between said fluorescently tagged components and said carrier particles are formed which are preferably diffusing within said solution;
   • illuminating the solution containing both the free and bound fluorescently tagged substances with optical radiation at a first wavelength to cause fluorescent output radiation at a second longer wavelength;
   • optically sensing output signals at said second wavelength resulting from said fluorescent output radiation by measuring in a repetitive mode a number of photon counts per time interval of defined length or by measuring in a repetitive mode a length of time intervals between preferably consecutive photon counts **characterized in that** said method further comprises the steps of
   • electronically processing the optically sensed signals to determine the amount of fluorescently tagged component which is free and/or that which is bound to the carrier particles without physically separating the free and bound fluorescent components, wherein said electronically processing the optically sensed output signals comprises the steps of

   determining a distribution function of the number of photon counts per said time interval and thereafter determining a distribution function of specific brightness of said carrier particles and/or said fluorescently tagged components on basis of said function of the number of photon counts; or
   determining a distribution function of the length of said time intervals and thereafter determining a distribution function of specific brightness of said carrier particles and/or said fluorescently tagged components on basis of said function of the length of time intervals.

2.   A binding assay method according to claim 1 wherein said electronically processing the optically sensed output signals further comprises the determination of a correlation function of the fluorescent output radiation.

3.   A binding assay method according to claim 1 or 2 comprising further components tagged with a fluorescent substance which differs from that tagged to said second component.

4.   A binding assay method according to any of claims 1 to 3 further comprising quencher molecules.

5.   A binding assay method according to any of claims 1 to 4, wherein said carrier particles comprise metal oxides, metal hydroxides, silicates including silica gels, metal colloids, silver halogenides, arsenic sulfide, nickel sulfide, cobalt sulfide, carbon colloids, controlled pore-glass beads, cellulose beads and/or organic polymers, such as polysterene beads, grafted co-poly beads, poly-acrylamide beads, latex beads, dimethylacrylamide beads, glass particles coated with hydrophobic polymers, divinylbenzene-crosslinked, polyethyleneglycol-grafted polysterene typed beads.

6.   A binding assay method according to any of claims 1 to 5 wherein said carrier particles have a diameter d $\leq$ approximately 1 $\mu$m.

**7.** A binding assay method according to claim 6, wherein said carrier particles have a diameter d in the range 1 nm $\leq$ d $\leq$ 1 $\mu$m, preferably in the range 10 nm $\leq$ d $\leq$ 500 nm, more preferably in the range 50 nm $\leq$ d $\leq$ 300 nm.

**8.** A binding assay method according to any of claims 1 to 7 wherein said carrier particles are substantially monodisperse.

**9.** A binding assay method according to any of claims 1 to 8, wherein said carrier particles have a coefficient of variation (CV) of diameter which is $\leq$ 20 %, preferably $\leq$ 10 %, more preferably $\leq$ 5 %.

**10.** A binding assay method according to any of claims 1 to 9, wherein said carrier particles exhibit only such a limited amount of binding sites that no quenching effects between neighboured fluorophores occurs.

**11.** A binding assay method according to any of claims 1 to 10, wherein illuminating the solution is performed on basis of a confocal optical set-up and/or multi-photon excitation and/or a near-field optical set-up.

**12.** A binding assay method according to any of claims 1 to 11, wherein electronically processing the optically sensed output signals is performed by applying an inverse transformation with linear regularisation and/or constraints.

**13.** A binding assay method according to any of claims 1 to 12 for use in high throughput drug screening, therapeutic monitoring and diagnostics.

**Patentansprüche**

**1.** Homogenes Fluoreszenzbindungsassayverfahren, umfassend die Schritte:

• Bereitstellen von Trägerteilchen in Lösung mit wenigstens einer Bindungsstelle auf jedem der Trägerteilchen;
• Bereitstellen wenigstens einer ersten und einer zweiten Komponente, wobei die erste eine zu testende Substanz ist und die zweite mit einer fluoreszierenden Substanz markiert ist;
• Einwirkenlassen der ersten und der zweiten Komponente auf die Trägerteilchen, so dass eine Reaktion zwischen der ersten und/oder zweiten Komponente und der wenigstens einen Bindungsstelle auf den Teilchen verursacht wird; wobei die Anzahl von fluoreszenzmarkierten Komponenten zu den Trägerteilchen wechselt und wobei Komplexe zwischen den fluoreszenzmarkierten Komponenten und den Trägerteilchen gebildet werden, die vorzugsweise innerhalb der Lösung diffundieren;
• Beleuchten der Lösung, die sowohl die freien als auch die gebundenen fluoreszenzmarkierten Substanzen enthält, mit optischer Strahlung bei einer ersten Wellenlänge, was eine Fluoreszenzstrahlung bei einer zweiten, längeren Wellenlänge bewirkt;
• optisches Messen von Ausgangssignalen bei der zweiten Wellenlänge, die aus der Fluoreszenzstrahlung resultieren, durch Messen einer Anzahl von Photonenzählereignissen pro Zeitintervall definierter Länge in einem repetitiven Modus oder durch Messen einer Länge von Zeitintervallen zwischen vorzugsweise aufeinanderfolgenden Photonenzählereignissen in einem repetitiven Modus, **dadurch gekennzeichnet, dass** das Verfahren weiterhin die Schritte umfasst:
• elektronisches Verarbeiten der optisch gemessenen Signale zur Bestimmung der Menge an fluoreszenzmarkierter Komponente, die frei ist und/oder die an die Trägerteilchen gebunden ist, ohne die freien und gebundenen fluoreszierenden Komponenten physisch zu trennen, wobei das elektronische Verarbeiten der optisch gemessenen Ausgangssignale die folgenden Schritte umfasst:

Bestimmen einer Verteilungsfunktion der Anzahl von Photonenzählereignissen pro Zeitintervall und danach Bestimmen einer Verteilungsfunktion der spezifischen Helligkeit der Trägerteilchen und/oder der fluoreszenzmarkierten Komponenten auf der Basis der Funktion der Anzahl von Photonenzählereignissen; oder Bestimmen einer Verteilungsfunktion der Länge der Zeitintervalle und danach Bestimmen einer Verteilungsfunktion der spezifischen Helligkeit der Trägerteilchen und/oder der fluoreszenzmarkierten Komponenten auf der Basis der Funktion der Länge der Zeitintervalle.

**2.** Bindungsassayverfahren gemäß Anspruch 1, wobei das elektronische Verarbeiten der optisch gemessenen Ausgangssignale weiterhin die Bestimmung einer Korrelationsfunktion der Fluoreszenzstrahlung umfasst.

**3.** Bindungsassayverfahren gemäß Anspruch 1 oder 2, das weitere Komponenten umfasst, die mit einer fluoreszierenden Substanz markiert sind, die sich von derjenigen, mit der die zweite Komponente markiert ist, unterscheidet.

**4.** Bindungsassayverfahren gemäß einem der Ansprüche 1 bis 3, das weiterhin Quenchermoleküle umfasst.

**5.** Bindungsassayverfahren gemäß einem der Ansprüche 1 bis 4, wobei die Trägerteilchen Metalloxide, Metallhydroxide, Silicate einschließlich Silikagelen, Metallkolloide, Silberhalogenide, Arsensulfid, Nickelsulfid, Cobaltsulfid, Kohlenstoffkolloide, Glaskügelchen mit gesteuerten Poren, Cellulosekügelchen und/oder organische Polymere, wie Polystyrolkügelchen, gepfropfte Copolykügelchen, Polyacrylamidkügelchen, Latexkügelchen, Dimethylacrylamidkügelchen, Glasteilchen, die mit hydrophoben Polymeren beschichtet sind, Divinylbenzol-vernetzte, Polyethylenglycol-gepfropfte Polystyrol-Typ-Kügelchen umfassen.

**6.** Bindungsassayverfahren gemäß einem der Ansprüche 1 bis 5, wobei die Trägerteilchen einen Durchmesser d ≤ ungefähr 1 μm aufweisen.

**7.** Bindungsassayverfahren gemäß Anspruch 6, wobei die Trägerteilchen einen Durchmesser d im Bereich 1 nm ≤ d ≤ 1 μm, vorzugsweise im Bereich 10 nm ≤ d ≤ 500 nm, besonders bevorzugt im Bereich 50 nm ≤ d ≤ 300 nm, aufweisen.

**8.** Bindungsassayverfahren gemäß einem der Ansprüche 1 bis 7, wobei die Trägerteilchen im Wesentlichen monodispers sind.

**9.** Bindungsassayverfahren gemäß einem der Ansprüche 1 bis 8, wobei die Trägerteilchen einen Variationskoeffizienten (CV) des Durchmessers aufweisen, der ≤ 20%, vorzugsweise ≤ 10%, besonders bevorzugt ≤ 5%, ist.

**10.** Bindungsassayverfahren gemäß einem der Ansprüche 1 bis 9, wobei die Trägerteilchen nur eine so begrenzte Anzahl von Bindungsstellen aufweisen, dass keine Quenching-Effekte zwischen benachbarten Fluorophoren auftreten.

**11.** Bindungsassayverfahren gemäß einem der Ansprüche 1 bis 10, wobei die Lösung auf der Basis eines konfokalen optischen Aufbaus und/oder einer Multiphotonenanregung und/oder eines optischen Nahfeldaufbaus beleuchtet wird.

**12.** Bindungsassayverfahren gemäß einem der Ansprüche 1 bis 11, wobei das elektronische Verarbeiten der optisch gemessenen Ausgangssignale durchgeführt wird, indem man eine inverse Transformation mit linearer Regularisierung und/oder Randbedingungen anwendet.

**13.** Bindungsassayverfahren gemäß einem der Ansprüche 1 bis 12 zur Verwendung im Hochdurchsatz-Wirkstoffscreening, in der therapeutischen Überwachung und Diagnose.

**Revendications**

**1.** Méthode de dosage de liaison fluorescente homogène comprenant les étapes de :

• fourniture de particules porteuses en solution avec au moins un site de liaison sur chacune desdites particules porteuses ;
• fourniture d'au moins des premier et second composants ; le premier étant une substance à tester, le second étant marqué d'une substance fluorescente ;
• exposition desdites particules porteuses aux premier et second composants, pour provoquer une réaction entre lesdits premier et/ou second composants et ledit au moins un site de liaison sur lesdites particules ; moyennant quoi le nombre de composants marqués par fluorescence par rapport auxdites particules porteuses change et dans lequel des complexes entre lesdits composants fluorescents marqués et lesdites particules porteuses se forment, lesquels, de préférence se diffusent au sein de ladite solution ;
• illumination de la solution contenant à la fois les substances marquées par fluorescence libres et liées, par un rayonnement optique à une première longueur d'onde pour provoquer un rayonnement de sortie fluorescent à une seconde longueur d'onde ;
• détection optique des signaux de sortie à ladite seconde longueur d'onde résultant dudit rayonnement de sortie fluorescent par la mesure en mode répétitif d'un nombre de décomptes de photons par intervalle de temps de longueur définie ou par la mesure en mode répétitif d'une longueur d'intervalles de temps entre des décomptes de photons préférentiellement consécutifs, **caractérisé en ce que** ladite méthode comprend en outre les étapes de

• traitement électronique des signaux détectés optiquement pour déterminer la quantité de composant marqué par fluorescence qui est libre et/ou qui est lié aux particules porteuses sans séparer physiquement les composants fluorescents libres et liés, dans lequel ledit traitement électronique des signaux de sortie détectés optiquement comprend les étapes de

détermination d'une fonction de distribution du nombre de décomptes de photons par ledit intervalle de temps et, par la suite, détermination d'une fonction de distribution de la luminosité spécifique desdites particules porteuses et/ou desdits composants marqués par fluorescence sur la base de ladite fonction du nombre de décomptes de photons ; ou

détermination d'une fonction de distribution de la longueur desdits intervalles de temps et, par la suite, détermination d'une fonction de distribution de la luminosité spécifique desdites particules porteuses et/ou desdits composants marqués par fluorescence sur la base de ladite fonction de la longueur des intervalles de temps.

2. Méthode de dosage de liaison selon la revendication 1, dans lequel ledit traitement électronique des signaux de sortie détectés optiquement comprend en outre la détermination d'une fonction de corrélation du rayonnement de sortie fluorescent.

3. Méthode de dosage de liaison selon la revendication 1 ou 2, comprenant en outre des composants marqués d'une substance fluorescente qui diffère de celle qui marque ledit second composant.

4. Méthode de dosage de liaison selon l'une quelconque des revendications 1 à 3, comprenant en outre de molécules extinctrices.

5. Méthode de dosage de liaison selon l'une quelconque des revendications 1 à 4, dans laquelle lesdites particules porteuses comprennent des oxydes de métal, des hydroxydes de métal, des silicates incluant des gels de silice, des colloïdes de métal, des halogénures d'argent, le sulfure d'arsenic, le sulfure de nickel, le sulfure de cobalt, des colloïdes de carbone, des billes de verre à porosité contrôlée, des billes de cellulose et/ou des polymères organiques, telles que des billes de polystyrène, des billes co-poly greffées, des billes de poly(acrylamide), des billes de latex, des billes de diméthylacrylamide, des particules de verre revêtues de polymères hydrophobes, des billes de type polystyrène greffé sur poly(éthylène glycol) réticulé par divinylbenzène.

6. Méthode de dosage de liaison selon l'une quelconque des revendications 1 à 5, dans laquelle lesdites particules porteuses ont un diamètre du $\leq$ approximativement 1 $\mu$m.

7. Méthode de dosage de liaison selon la revendication 6, dans laquelle lesdites particules porteuses ont un diamètre d dans la plage de 1 nm $\leq$ d $\leq$ 1 $\mu$m, de préférence dans la plage de 10 nm $\leq$ d $\leq$ 500 nm, de manière davantage préférée dans la plage de 50 nm $\leq$ d $\leq$ 300 nm.

8. Méthode de dosage de liaison selon l'une quelconque des revendications 1 à 7, dans laquelle lesdites particules porteuses sont sensiblement monodispersées.

9. Méthode de dosage de liaison selon l'une quelconque des revendications 1 à 8, dans laquelle lesdites particules porteuses ont un coefficient de variation (CV) de diamètre qui est $\leq$ 20 %, de préférence $\leq$ 10 %, de manière davantage préférée $\leq$ 5 %.

10. Méthode de dosage de liaison selon l'une quelconque des revendications 1 à 9, dans laquelle lesdites particules porteuses présentent uniquement une quantité si limitée de sites de liaison qu'il ne se produit pas d'effets d'extinction entre des fluorophores voisins.

11. Méthode de dosage de liaison selon l'une quelconque des revendications 1 à 10, dans laquelle l'illumination de la solution est réalisée sur la base d'un réglage optique confocal et/ou d'une excitation multiphotonique et/ou d'un réglage optique en champ proche.

12. Méthode de dosage de liaison selon l'une quelconque des revendications 1 à 11, dans laquelle le traitement électronique des signaux de sortie détectés optiquement est réalisé en appliquant une transformation inverse avec une régularisation linéaire et/ou des contraintes.

13. Méthode de dosage de liaison selon l'une quelconque des revendications 1 à 12, pour son utilisation dans un criblage haut débit de médicaments, la surveillance thérapeutique et les diagnostics.

Fig. 1a

Fluorescence Label

Analyte   Antibody carrying
Nanoparticle

Fig. 1b

Fluorescence Label

Analyte

Antibody carrying
Nanoparticle

Fig. 1c

Fig.1d

Fig. 1e

Fig.2-1

a)

Fig. 2-2

**b)**

Fig. 2-3

c)

log $g_B$

log c(Competitor)

N=1
N=10
N=100
N=1000

Fig.3

Fig.4

Fig.5

c(17-β-Estradiol) / nM

Fig. 6

Fig. 7

EP 1 157 267 B1

Fig. 8-1

Fig. 8-2

Fig. 8-3

Fig. 9-1

A

$c_2 = 0.22$

$I_2$ (kHz)

HCG (nM)

Fig. 9-2

Fig. 9-3

Fig. 10

Fig. 11

Fig. 12

Fig. 13

Vmax= 17.7+-1.3
Km = (16.2+-4.0) µM

ATP / µM

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0884583 A1
- US 4421860 A
- EP 83304019 A
- EP 0099266 A

### Non-patent literature cited in the description

- **AUER M. et al.** *Drug Discovery Today,* October 1998, vol. 3, 457-465
- **W. H. PRESS ; S. A. TEUKOLSKY ; W. T. VETTERLING ; B. P. FLANNERY.** Numerical recipes in C: the art of scientific computing. Cambridge University Press, 1992, 808
- **UAUY, R. ; SHAPIRO D.L. ; SMITH, B. ; WARSHAW, J.B.** *Pediatrics,* 1975, vol. 55, 595-8
- Clinical Gynecologic Endocrinology and Infertility. Williams and Wilkins, 1989, 91-119
- Pregnancy and fetal function. **RUSSEL PT.** Clinical Chemistry: theory, analysis and correlation. CV Mosby, 1989, 572
- **KAPLAN et al.** *Human chorionic gonadotropin,* 938-944